# EUROPÄISCHE PATENTSCHRIFT

(11) **EP 3 898 469 B1**
(45) Veröffentlichungstag und Bekanntmachung des Hinweises auf die Patenterteilung: **18.09.2024**
(21) Anmeldenummer: 19801864.0
(22) Anmeldetag: 11.11.2019
(51) Int. Cl.: B65G 47/29, B65G 47/84

(54) **TRANSPORTSTRECKE EINER HANDHABUNGS- UND/ODER VERPACKUNGSMASCHINE UND VERFAHREN ZUR ERZEUGUNG VON LÜCKEN IN EINEM PRODUKTSTROM**
TRANSPORT SECTION OF A HANDLING AND/OR PACKAGING MACHINE AND METHOD FOR CREATING GAPS IN A PRODUCTION FLOW
VOIE DE TRANSPORT D'UNE MACHINE DE MANUTENTION ET/OU D'EMBALLAGE ET PROCÉDÉ DE FORMATION D'INTERVALLES DANS UN FLUX DE PRODUITS

(30) Priorität: 17.12.2018 DE 102018132437
(43) Veröffentlichungstag der Anmeldung: 27.10.2021
(73) Patentinhaber: Krones Aktiengesellschaft, 93073 Neutraubling (DE)
(72) Erfinder: SPINDLER, Herbert, 93073 Neutraubling (DE); KROELL, Thorsten, 93073 Neutraubling (DE); MAURER, Peter, 93073 Neutraubling (DE)
(74) Vertreter: Benninger, Johannes
(86) Internationale Anmeldenummer: PCT/EP2019/080862
(87) Internationale Veröffentlichungsnummer: WO 2020/126215

(56) Entgegenhaltungen:
- GB-A- 2 090 804
- US-A- 3 901 376
- US-A- 5 042 636
- US-A1- 2012 285 799

## Beschreibung

Die vorliegende Erfindung betrifft eine Transportstrecke einer Handhabungs- und/oder Verpackungsmaschine, die einen Horizontalförderabschnitt mit einer sich in einer Förderrichtung bewegenden Auflage- und/oder Förderebene zur annähernd lückenlosen oder gering voneinander beabstandeten Beförderung von Stückgütern hintereinander in einer Förderrichtung umfasst. Zudem betrifft die Erfindung ein Verfahren zur Erzeugung von Lücken zwischen annähernd lückenlos oder gering voneinander beabstandet hintereinander auf einer Auflage- und/oder Förderebene in einer Förderrichtung bewegten Stückgütern.

Im Zusammenhang mit der Verpackung von Stückgütern werden die Stückgüter bei vielen Anwendungen in geschlossenen, d.h. in lückenlosen Reihen und ohne Zwischenabstände auf Horizontalfördereinrichtungen befördert. Dabei können sich die in Förderrichtung sowie die in Gegenrichtung weisenden Stirnseiten der Stückgüter wahlweise berühren oder geringe Abstände voneinander aufweisen. Je nach Art der Weiterverarbeitung oder Verpackung der Stückgüter kann es notwendig sein, zwischen Gruppen von Stückgütern oder zwischen allen einzelnen Stückgütern Abstände herzustellen.

Zu diesem Zweck können bspw. von unten in die Transportbahn gesteuert einführbare Trennrollen, Stößel o. dgl. eingesetzt werden, die mit einem der Stückgüter an seiner Unterseite in Eingriff gelangen und es um ein bestimmtes Maß von der Förderebene nach oben abheben. Bei Kartongebinden oder Karton-Umverpackungen als Stückgüter können insbesondere Rollenfinger zur Einteilung des Stückgutstromes eingesetzt werden. Die Rollenfinger heben die abzutrennenden Stückgüter an, so dass diese von dem Finger abrollen und die nachfolgenden Stückgüter durch den in den Produktstrom eingreifenden Finger zurückgehalten werden.

Allerdings gibt es Stückgüter mit Bodenflächen, die sie für derartige Einteilverfahren ungeeignet machen, so wie dies bei manchen Karton-Umverpackungen mit nicht geschlossenen Bodenflächen der Fall ist. So werden für die Aufnahme von mehreren gleichartigen Artikeln wie etwa Getränkebehältern oftmals sog. Baskets oder Kartongebinde eingesetzt, bei denen der Gebindeboden nicht mit allen Seitenlaschen verbunden ist, so dass Zwischenräume vorhanden sind. In diese Zwischenräume oder in andere Öffnungen im Boden des Gebindes bzw. Stückguts können die Rollenfinger nach dem Anheben eines solchen Gebindes einhaken, wodurch das Gebinde unmittelbar zurückgehalten und am Abrollen auf der Rolle des Fingers gehindert wird. Aus diesem Grund ist es üblich, für die Verarbeitung solcher Gebinde pneumatisch betätigte Klemmbacken zu verwenden, die bei seitlicher Zustellung an ein anzuhaltendes Stückgut in der Lage sind, bedarfsweise den kompletten Produktstrom zurückzuhalten und solchermaßen eine Lücke zu bilden, in die der Einteilfinger auftauchen kann.

Da solche pneumatisch betätigten Klemmbacken nicht nur eines erheblichen Installationsaufwandes bedürfen, sondern bei jedem Einteilvorgang den kontinuierlichen Produktstrom komplett anhalten, wird eine ausgeprägte Unruhe im normalerweise kontinuierlichen Produktstrom erzeugt. Zudem entsteht bei jedem Eingriff oder Einteilvorgang ein hoher Druck und die Pakete oder Stückgüter springen nach dem Öffnen der Backen abrupt nach vorne. Durch diesen ausgeprägten Stop-and-go-Betrieb wird die Leistung solcher Verpackungsstrecken stark reduziert. Außerdem führen die ruckartigen Bewegungen zu einem erhöhten Verschleiß der Transportspurketten und der Klemmbacken. Je nach Beschichtung oder Bedruckung der geförderten Stückgüter können sich nach längerem Betrieb Abrieb und Rückstände auf den Klemmbacken ablagern, wodurch deren Bremswirkung allmählich nachlässt. Dies erfordert eine Reinigung in kurzen Intervallen.

Aus der US 3,901,376 A ist eine Vorrichtung zum Transportieren und Auswählen von Objekten bekannt, die verpackt oder entpackt werden sollen. Bei der Vorrichtung nach US-Schrift tritt ein Greifer mit einer vorderen Kiste einer Reihe an Kisten in Kontakt und bewegt sich sodann unter die vordere Kiste, wobei der Greifer die vordere Kiste gegenüber ihrer Transportebene anhebt. Hierdurch kann die vordere Kiste gegenüber einer nachfolgenden Kiste beabstandet werden.

Das vorrangige Ziel der Erfindung kann angesichts der identifizierten Unzulänglichkeiten oder Nachteile der bekannten Einteilvorrichtungen darin gesehen werden, eine Vorrichtung und ein Verfahren zur Erzeugung von Lücken zwischen annähernd lückenlos oder gering voneinander beabstandet hintereinander auf einer Auflage- und/oder Förderebene in einer Förderrichtung bewegten Stückgütern zur Verfügung zu stellen, die sich für die unterschiedlichsten Stückgüter eignen und die zudem unter allen auftretenden Betriebsbedingungen zur gewünschten präzisen Lückenbildung führen können. Vorzugsweise sollen die Vorrichtung und das Verfahren einen Betrieb ermöglichen, bei dem die Stückgüter während eines Einteil- oder Lückenbildungsvorganges nicht zum Stillstand kommen müssen.

Diese Ziele werden mit den Gegenständen mit den Merkmalen der unabhängigen Ansprüche erreicht. Weitere vorteilhafte Ausgestaltungen werden durch die abhängigen Ansprüche beschrieben.

Zur Erreichung der genannten Ziele schlägt die Erfindung neben dem weiter unten in unterschiedlichen Ausführungsvarianten beschriebenen Verfahren zur Erzeugung von Lücken zwischen annähernd lückenlos oder gering voneinander beabstandet hintereinander auf einer Auflage- und/oder Förderebene in einer Förderrichtung bewegten Stückgütern eine Transportstrecke mit einem Horizontalförderabschnitt mit einer sich in einer definierten Förderrichtung bewegenden Auflage- und/oder Förderebene zur annähernd lückenlosen oder gering voneinander beabstandeten Beförderung von Stückgütern hintereinander in einer Förderrichtung vor. Diese Transportstrecke kann sich insbesondere in einer Handhabungs- und/oder Verpackungsmaschine befinden und insofern integraler Bestandteil einer wie auch immer gearteten und ausgestalteten Handhabungs- und/oder Verpackungsmaschine sein, in der Stückgüter transportiert und/oder verpackt oder auf sonstige Weise verarbeitet werden.

Wenn im vorliegenden Zusammenhang von Stückgütern die Rede ist, so können dies die unterschiedlichsten Artikel, Verpackungen, Pakete, Kisten o. dgl. sein. Stückgüter im Sinne der vorliegenden Erfindung können auch Umverpackungen mit darin befindlichen oder darin einzusetzenden Artikeln, Artikelgruppierungen etc. sein, wobei diese Artikel insbesondere durch gleichartige und/oder gleich geformte und dimensionierte Artikel gebildet sein können, bspw. durch Getränkebehälter, Dosen, Flaschen o. dgl. Behältnisse.

Der Horizontalförderabschnitt, der Teil der erfindungsgemäßen Transportstrecke ist, kann bspw. eine Horizontalfördereinrichtung mit einer sich in Transportrichtung bewegenden Auflage- und/oder Förderebene sein. Eine solche Horizontalfördereinrichtung kann etwa durch sog. endlos umlaufende Mattenkettenförderer, Gliederbänder, Mattenförderern o. dgl. gebildet sein.

Der einen Teil des Horizontalförderabschnittes bildenden Auflage- und/oder Förderebene ist eine durch diese Ebene mit den darauf liegend oder stehend beförderten Stückgütern nach oben hindurchgreifende und sich zumindest phasenweise gegenüber der Auflage- und/oder Förderebene mit reduzierter Geschwindigkeit in Förderrichtung bewegende Einteileinrichtung zugeordnet, die wenigstens ein Stückgut von wenigstens einem weiteren, in Förderrichtung vorauslaufenden Stückgut distanzieren und gegenüber dem vorauslaufenden Stückgut sowie gegenüber der sich fortbewegenden Auflage- und/oder Förderebene verzögern kann.

Weiterhin ist die erfindungsgemäß Transportstrecke dadurch charakterisiert, dass die Einteileinrichtung wenigstens einen durch die Auflage- und/oder Förderebene abschnittsweise nach oben hindurchgreifenden und sich zumindest phasenweise gegenüber der Auflage- und/oder Förderebene mit reduzierter Geschwindigkeit in Förderrichtung bewegenden Einteilfinger umfasst, wobei dieser Einteilfinger mindestens ein Rotationselement trägt, das insbesondere mit einer Bodenfläche des dem zurückzuhaltenden Stückgut vorauslaufenden Stückgutes wechselwirken kann.

Hierbei kann insbesondere vorgesehen sein, dass das mindestens eine Rotationselement des Einteilfingers um eine Achse rotieren kann, die ungefähr horizontal und im Wesentlichen quer zur Förderrichtung liegt, wobei das Rotationselement am Einteilfinger drehbar gelagert ist und nur dann mit einem der Stückgüter wechselwirken kann, wenn zumindest ein Teil des Rotationselementes über die Auflage- und/oder Förderebene nach oben aus dieser hinausragt.

Erfindungsgemäß weist das Rotationselement eine Strukturierung an seinem Außenumfang auf und ist durch einen Stern mit mindestens zwei Zacken gebildet, wodurch die gewünschte Wechselwirkung mit den zu distanzierenden Stückgütern und die angestrebte Lückenbildung zwischen aufeinander folgenden Stückgütern einer Transportreihe erleichtert wird.

Wahlweise kann vorgesehen sein, dass die Strukturierung des Rotationselements durch einen Stern mit mindestens drei Zacken gebildet ist, wodurch die gewünschte Wechselwirkung mit den zu distanzierenden Stückgütern erleichtert wird.

Die Einteileinrichtung mit dem gemäß der vorliegenden Erfindung gestalteten wenigstens einen Einteilfinger erleichtert insbesondere die Handhabung von Stückgütern, die keinen glatten Boden aufweisen, sondern bspw. eine Öffnung oder mehrere Öffnungen. Solche Stückgüter können bspw. Karton-Umverpackungen zur Aufnahme mehrerer Getränkebehälter sein, die auch als sog. "Over-Top-Open-Gebinde" bezeichnet werden können. Eine wichtige Komponente dieses Einteilfingers ist ein drehbar gelagertes Rotationselement oder ein drehbar gelagerter Stern mit zwei, drei oder mehr Zacken. Zum Einteilen der Stückgüter oder Gebinde fährt der Finger von unten gegen den Boden des einzuteilenden Gebindes und hebt dieses mit dem Stern an. Durch den Druck der nachfolgenden Gebinde wird das angehobene Gebinde auf dem Stern weitergeschoben, bis das nachfolgende Gebinde den Stern berührt.

Eine Zacke des Sterns schiebt sich somit schon unter die Lücke im Gebindeboden. Die nachfolgenden Gebinde erzeugen ein Drehmoment auf den Stern und versetzen diesen in Rotation. Das angehobene Gebinde wird aktiv, durch die Rotation des Sterns, von dem Finger abgeworfen. Dieses aktive Abwerfen verhindert ein Einhaken der Finger in die Bodenlücke der Gebinde. Die nachfolgenden Gebinde werden an den senkrechten Laschen oder Wirkungsflächen des Einteilfingers zurückgehalten und der Produktstrom ist eingeteilt, d.h. die gewünschte Lücke zwischen mindestens zwei der in Transportrichtung beförderten Stückgüter gezogen.

Eine Zacke des Sterns kann eine Kontur aufweisen, welche sich aufgrund ihrer Form gleichsam selbständig hinter das hochgehobene Gebinde oder Stückgut schiebt.

Dadurch, dass ein hinter dem angehobenen Stückgut folgendes Stückgut auf einem weiteren Zacken des Rotationselement aufsteht, während das angehobene Stückgut von einem anderen Zacken angehoben wird, kann verhindert werden, dass sich das Rotationselement in dieser Situation drehen kann.

Eine Zacke des Rotationselementes kann wahlweise auch durch eine um ihre eigene Achse drehbare Rolle gebildet sein, wobei mindestens zwei, bevorzugt mindestens drei Rollen auf einem Rotationselement angeordnet sein können. Die mindestens zwei Rollen sind dabei jeweils um ihre eigene Achsen am Rotationselement und zusätzlich um die gemeinsame Achse des Rotationselementes selbst drehbar gelagert.

Die Erfindung ermöglicht eine störungsfreie Verarbeitung von solchen Stückgütern, die beim Einsatz herkömmlicher Einteilfinger Probleme machen können, wie dies bspw. bei sog. "Over-Top-Open-Gebinde" der Fall sein kann. Die erfindungsgemäße Transportstrecke liefert damit eine kostengünstigere Variante im Vergleich zu bekannten Einteilstrecken, die mit pneumatischen Klemmbacken arbeiten. Der Umbauaufwand zwischen unterschiedlichen Verarbeitungsprogrammen wird deutlich reduziert. Der Verschleiß der Klemmplatten entfällt und die Transportspurketten werden weitaus weniger belastet. Die erfindungsgemäße Transportstrecke ermöglicht einen höheren Produktdurchsatz mit einer Verarbeitungstaktrate von etwa 60 Takten je Minute oder mehr.

Zur Erreichung der oben genannten Ziele schlägt die Erfindung neben der erfindungsgemäßen Transportstrecke ein Verfahren zur Erzeugung von Lücken zwischen annähernd lückenlos oder gering voneinander beabstandet hintereinander auf einer Auflage- und/oder Förderebene in einer Förderrichtung bewegten Stückgütern mit den nachfolgend erläuterten Merkmalen vor.

Die Beabstandung der Stückgüter erfolgt, indem wenigstens ein Stückgut von wenigstens einem weiteren, in Förderrichtung vorauslaufenden Stückgut mittels einer durch die Auflage- und/oder Förderebene nach oben hindurchgreifenden und sich zumindest phasenweise gegenüber dieser mit reduzierter Geschwindigkeit in Förderrichtung bewegenden Einteileinrichtung distanziert und gegenüber dem vorauslaufenden Stückgut sowie gegenüber der sich fortbewegenden Auflage- und/oder Förderebene verzögert wird.

Dabei kann es entweder vorkommen, dass die Einteileinrichtung genau in eine schon vorhandene Lücke zwischen aufeinander folgend beförderten Stückgütern eingreift, so dass ein zu verzögerndes Stückgut bereits nach dem Anheben der Einteileinrichtung an einer Anlagefläche oder -kante der Einteileinrichtung anliegt, so dass das dort anliegende Stückgut unter Ausbildung der Lücke zum vorauslaufenden Stückgut gegenüber der Auflage- und/oder Förderebene verzögert wird.

Der Normalfall wird jedoch der sein, dass das dem wenigstens einen zu verzögernden Stückgut vorauslaufende Stückgut von der sich über die Auflage- und/oder Förderebene nach oben hinausbewegenden Einteileinrichtung kippend angehoben wird und die Einteileinrichtung unter Wirkung der weiteren Fortbewegung der Auflage- und/oder Förderebene und/oder unter Wirkung des Staudrucks des nächstfolgenden Stückgutes übersteigt, bis das dem kippend angehobenen vorauslaufenden Stückgut folgende, zu verzögernde Stückgut an einer Anlagefläche oder -kante der Einteileinrichtung anliegt und unter Ausbildung der Lücke zum vorauslaufenden Stückgut gegenüber der Auflage- und/oder Förderebene verzögert wird.

Erfindungsgemäß sieht das Verfahren vor, dass die Einteileinrichtung wenigstens einen durch die Auflage- und/oder Förderebene abschnittsweise nach oben hindurchgreifenden und sich zumindest phasenweise gegenüber der Auflage- und/oder Förderebene mit reduzierter Geschwindigkeit in Förderrichtung bewegenden Einteilfinger mit mindestens einem, insbesondere mit einer Bodenfläche des dem zurückzuhaltenden Stückgut vorauslaufenden Stückgutes wechselwirkenden Rotationselement aufweist. Bei diesem Rotationselement kann es sich insbesondere um eine Einteilhilfe handeln, die um eine ungefähr horizontale und im Wesentlichen quer zur Förderrichtung sowie oberhalb dieser Förderrichtung liegende Achse rotiert bzw. rotieren kann. Außerdem weist das Rotationselement eine Strukturierung an seinem Außenumfang auf, die mehrere radiale Finger o. dgl. umfasst. Insbesondere kann es sich bei dem Rotationselement um einen Stern mit mindestens drei Zacken handeln.

Mit Hilfe dieser durch einen drei- oder vierzackigen Stern o. dgl. strukturierten Rotationskörper gebildeten Einteilhilfe kann die Lückenbildung ohne die Gefahr von Störungen im laufenden Förderbetrieb erreicht werden, indem bspw. die Einteileinrichtung oder der mindestens eine Einteilfinger zum Einteilen der Stückgüter und/oder zum Herstellen einer Lücke von unten gegen den Boden des einzuteilenden Stückgutes fährt und dieses mit dem Rotationselement oder mit dem Stern anhebt.

Auf diese Weise kann durch den Druck der nachfolgenden Stückgüter das angehobene Stückgut auf dem Rotationselement oder dem Stern weitergeschoben werden, bis das nachfolgende Stückgut das Rotationselement oder den Stern kontaktiert und/oder am Einteilfinger anliegt. Gleichzeitig rotiert das strukturierte Rotationselement oder der drei- oder vierzackige Stern, wodurch eine passende Zacke des Sterns unter eine Lücke im Stückgutboden geschoben wird. Diese Drehung des Sterns wird unterstützt, da die nachfolgenden Stückgüter im Rotationselement oder im Stern ein Drehmoment erzeugen und dieses oder diesen in Rotation versetzen.

Das Verfahren sieht weiterhin in seinem Einteilungsverlauf vor, dass das jeweils von der Einteileinrichtung kippend angehobene Stückgut aktiv und/oder durch die Rotation des Rotationselements oder des Sterns vom Einteilfinger heruntergeschoben oder abgeworfen wird. Dieses aktive Abwerfen verhindert ein Einhaken der Finger in die Bodenlücke der Gebinde bzw. in einen teilweise offenen Boden der Stückgüter.

Das Verfahren zur Ausbildung einer Lücke im Produktstrom sieht schließlich vor, dass zumindest das nachfolgende Stückgut mitsamt den diesem folgenden Stückgütern an einer vertikalen Anlagefläche des Einteilfingers zurückgehalten werden, wodurch der Produktstrom oder der Stückgutstrom unter Ausbildung der Lücke eingeteilt wird. Die Lückenbildung ist abgeschlossen, sobald die Einteileinrichtung oder der Einteilfinger wieder unter die Förderebene abtaucht und die zuvor zurückgehaltenen Stückgüter sich wieder mit der Fördergeschwindigkeit der Auflage- und/oder Förderebene bewegen können.

Wahlweise können je nach Breite der beförderten Stückgüter auch für jede Transportbahn zwei parallele Einteileinrichtungen vorgesehen sein, die gleich aufgebaut sind und synchron in jeweiligen umlaufenden Führungen bewegt werden.

Ein besonderer Vorteil des beschriebenen Verfahrens sowie des beschriebenen Transportabschnittes besteht darin, dass ein mehrbahniger Betrieb problemlos möglich ist, während die aus dem Stand der Technik bekannten seitlich zustellbaren Pneumatikzylinder in der Regel nur einen zweibahnigen Betrieb zulassen, bei dem die Stückgüter unmittelbar nebeneinander befördert werden, da sie bei zugestellten Pneumatikzylindern mit ihren zueinander weisenden Seitenflächen aneinander gedrückt werden. Da eine solche Wechselwirkung bei der erfindungsgemäßen Anordnung nicht stattfindet, können wahlweise auch drei, vier oder mehr parallele Bahnen mit Stückgütern betrieben werden, bei denen die Lückenbildung jeweils in der beschriebenen Weise stattfinden kann.

Es sei an dieser Stelle ausdrücklich erwähnt, dass alle Aspekte und Ausführungsvarianten, die im Zusammenhang mit der erfindungsgemäßen Transportstrecke erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Transportstrecke von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Transportstrecke betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Transportstrecke.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in insgesamt sieben schematischen Seitenansichten (Fig. 1A, Fig. 1B, Fig. 1C, Fig. 1D, Fig. 1E, Fig. 1F und Fig. 1G) aufeinander folgende Prozessphasen einer ersten Verfahrensvariante zur Lückenbildung, das mittels einer Ausführungsvariante eines erfindungsgemäßen Transportabschnittes zur Beförderung von Stückgütern durchgeführt wird.
Fig. 2 zeigt in insgesamt sieben schematischen Seitenansichten (Fig. 2A, Fig. 2B, Fig. 2C, Fig. 2D, Fig. 2E, Fig. 2F und Fig. 2G) aufeinanderfolgende Prozessphasen einer zweiten Verfahrensvariante zur Lückenbildung, das mittels einer Ausführungsvariante des erfindungsgemäßen Transportabschnittes zur Beförderung von Stückgütern durchgeführt wird.
Fig. 3 zeigt in einer schematischen Seitenansicht eine weitere Variante des Transportabschnittes.
Fig. 4 zeigt eine schematische Ansicht einer zweibahnigen Transportstrecke, die mit Einteileinrichtungen gemäß Figuren 1, 2 oder 3 ausgestattet sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

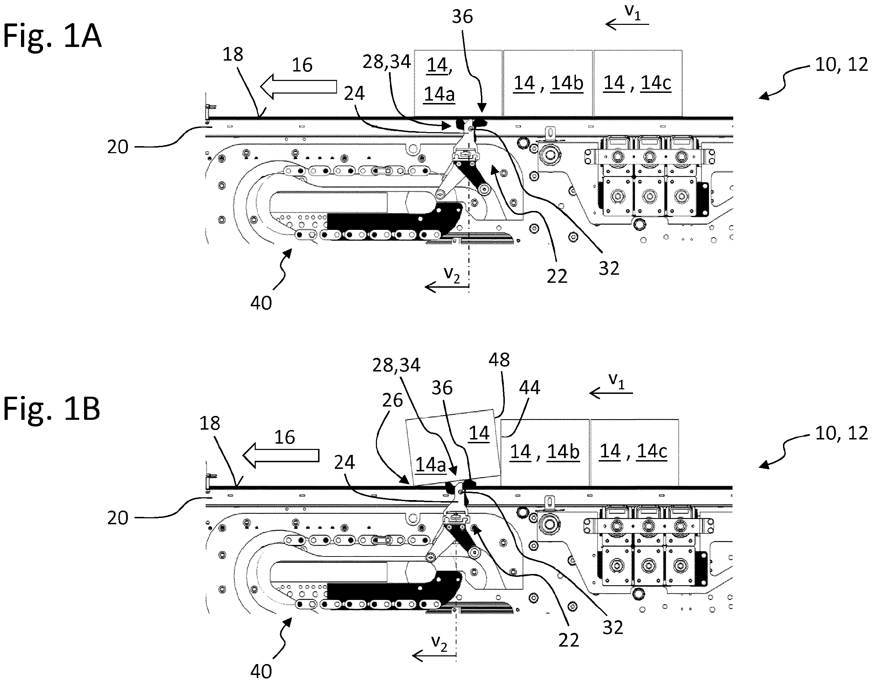

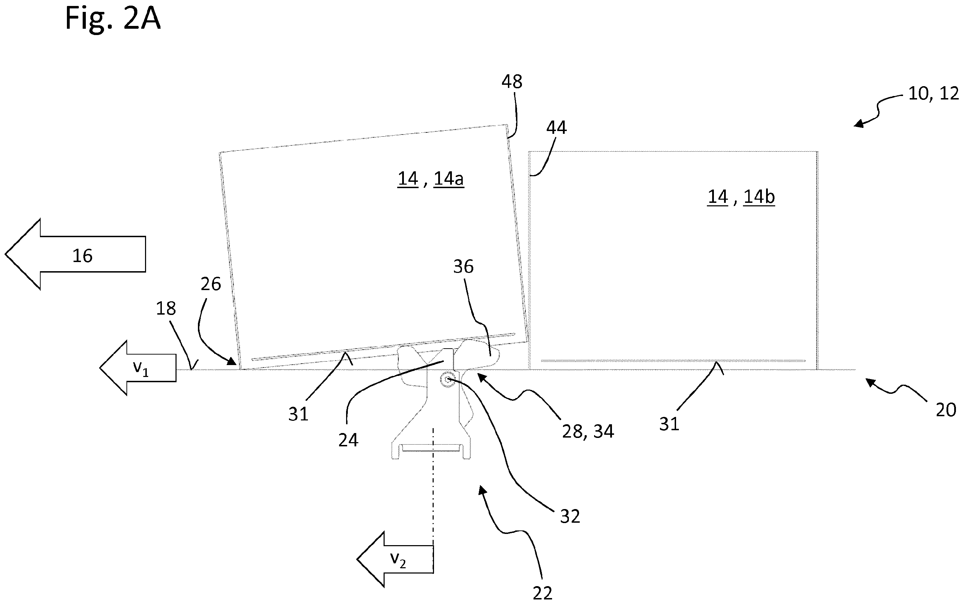

Die schematischen Seitenansichten der Figuren 1A bis 1G sowie der Figuren 2A bis 2G verdeutlichen jeweils einen Horizontalförderabschnitt 10 einer Ausführungsvariante einer erfindungsgemäßen Transportstrecke 12, auf der Lücken zwischen annähernd lückenlos oder gering voneinander beabstandet hintereinander bewegten Stückgütern 14 erzeugt werden können. Die Transportstrecke 12 mit ihrem Horizontalförderabschnitt 10 dient der Beförderung der Stückgüter 14 in einer definierten Förderrichtung 16, die hier jeweils von rechts nach links weist. Der Horizontalförderabschnitt 10 umfasst eine sich in Förderrichtung 16 bewegende Auflage- und/oder Förderebene 18, die insbesondere durch eine Horizontalfördereinrichtung 20 gebildet sein kann, die bspw. endlos umlaufende Mattenkettenförderer, Gliederbänder, Mattenförderern o. dgl. aufweisen kann, auf der die Stückgüter 14 in ständiger Folge befördert werden können.

Die im vorliegenden Zusammenhang generell als Stückgüter 14 bezeichneten Artikel können in der Praxis durch unterschiedliche Artikel, Verpackungen, Pakete, Kisten o. dgl. gebildet sein. Die Stückgüter 14 im Sinne der vorliegenden Erfindung können auch Umverpackungen mit darin befindlichen oder darin einzusetzenden Artikeln, Artikelgruppierungen etc. sein, wobei diese Artikel insbesondere durch gleichartige und/oder gleich geformte und dimensionierte Artikel gebildet sein können, bspw. durch Getränkebehälter, Dosen, Flaschen o. dgl. Behältnisse.

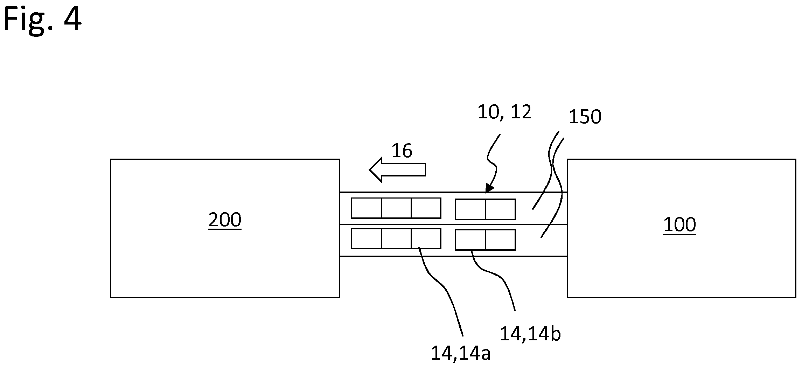

Die in den Figuren 1A bis 1G in Teilen und in den Figuren 2A bis 2G in Detailausschnitten gezeigte Transportstrecke 12 kann sich insbesondere in einer hier nicht näher veranschaulichten und deshalb nicht mit einer Bezugsziffer gekennzeichneten Handhabungs- und/oder Verpackungsmaschine (vgl. Fig. 4) befinden und insofern integraler Bestandteil einer wie auch immer gearteten und ausgestalteten Handhabungs- und/oder Verpackungsmaschine sein, in der die Stückgüter 14 in der gezeigten Weise transportiert werden, um sie in hier nicht gezeigten nachgeordneten Handhabungs- und/oder Verpackungsstationen zu verpacken oder auf sonstige Weise weiterzuverarbeiten, bspw. auch zu palettieren.

Der einen Teil des Horizontalförderabschnittes 10 bildenden Auflage- und/oder Förderebene 18 ist eine durch diese Ebene 18 mit den darauf liegend oder stehend beförderten Stückgütern 14 nach oben hindurchgreifende und sich zumindest phasenweise gegenüber der Fördergeschwindigkeit v₁ der Auflage- und/oder Förderebene 18 mit reduzierter Einteilgeschwindigkeit v₂ in Förderrichtung 16 bewegende Einteileinrichtung 22 zugeordnet, die in der Lage ist, ein Stückgut 14 oder mehrere hintereinander beförderte Stückgüter 14 von den in Förderrichtung 16 vorauslaufenden Stückgütern 14 zu distanzieren und gegenüber dem vorauslaufenden Stückgut 14 oder den vorauslaufenden Stückgütern 14 sowie gegenüber der sich fortbewegenden Auflage- und/oder Förderebene 18 zu verzögern.

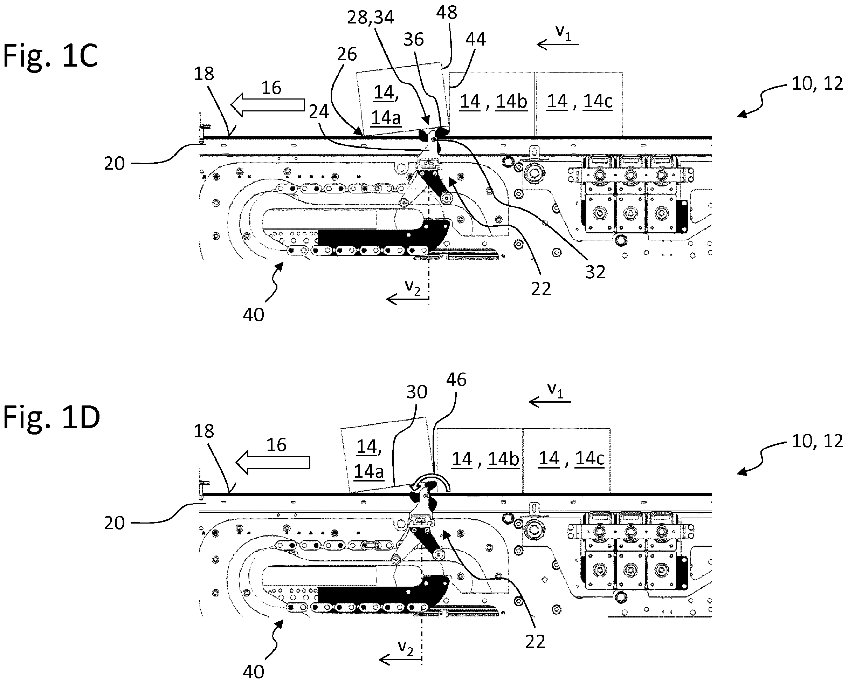

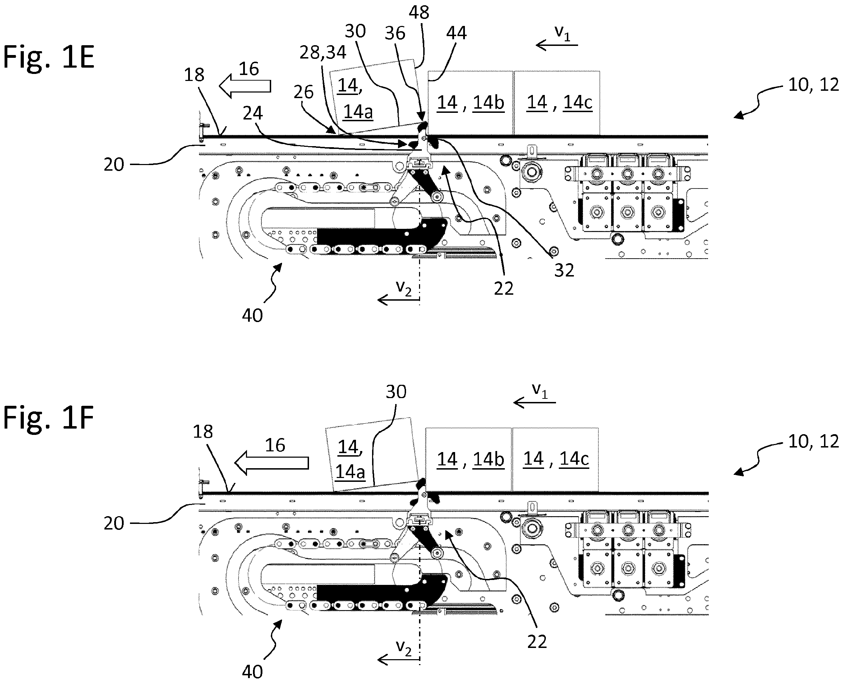

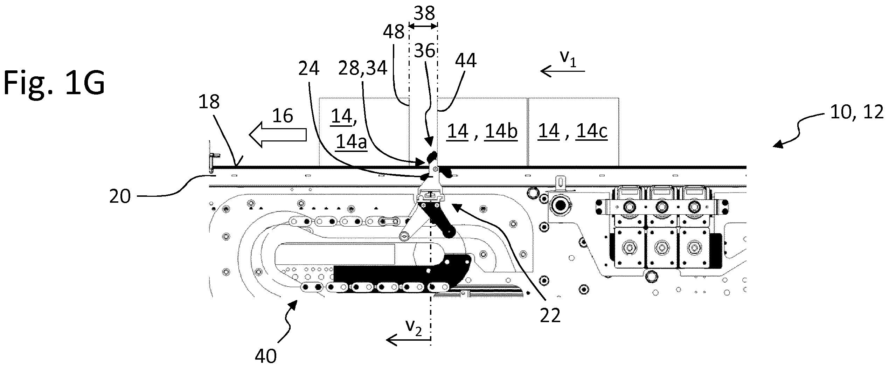

Die Einteileinrichtung 22 umfasst mindestens einen durch die Auflage- und/oder Förderebene 18 abschnittsweise nach oben hindurchgreifenden und sich zumindest phasenweise gegenüber der Fördergeschwindigkeit v₁ der Auflage- und/oder Förderebene 18 mit der geringeren Einteilgeschwindigkeit v₂ in Förderrichtung 16 bewegenden Einteilfinger 24, der während der Einteilphase, bei der die Einteileinrichtung 22 über das Höhenniveau der Auflage- und/oder Förderebene 18 gehoben ist und auf diese Weise das ggf. über dem angehobenen Einteilfinger 24 befindliche Stückgut 14 ebenfalls anhebt, so dass dieses leicht nach vorne oder nach hinten kippt und mit der nicht angehobenen vorderen Bodenkante 26 weiterhin auf der Auflage- und/oder Förderebene 18 der Horizontalfördereinrichtung 20 liegt. Die nicht vom Einteilfinger 24 der Einteileinrichtung 22 angehobenen Stückgüter 14 liegen dagegen flächig auf der Auflage- und/oder Förderebene 18 auf und werden weiterhin mit der Fördergeschwindigkeit v₁ in Förderrichtung 16 bewegt (vgl. Fig. 1B, Fig. 1C, Fig. 1D und Fig. 1E), bis sie vom Einteilfinger 24 erfasst und auf die Einteilgeschwindigkeit v₂ abgebremst werden (vgl. Fig. 1F und Fig. 1G).

Alle Seitenansichten der Figuren 1A bis 1G lassen deutlich ein Rotationselement 28 erkennen, das oberseitig am Einteilfinger 24 angeordnet ist, und das in der nachfolgend näher erläuterten Weise mit einer Bodenfläche 30 des dem zurückzuhaltenden Stückgut 14b vorauslaufenden Stückgutes 14a wechselwirken kann. Das Rotationselement 28 des Einteilfingers 24 kann um eine Achse 32 rotieren, die bei nach oben bewegtem Einteilfinger 24 leicht unterhalb des Höhenniveaus der Auflage- und/oder Förderebene 18 der Horizontalfördereinrichtung 20 liegt. Zudem liegt die Achse 32, um die das Rotationselement 28 rotieren kann, ungefähr horizontal und im Wesentlichen quer zur Förderrichtung 16.

Im gezeigten Ausführungsbeispiel weist das Rotationselement 28 eine Strukturierung an seinem Außenumfang auf und ist durch einen Stern 34 mit drei gleichen Zacken 36 gebildet, wodurch die gewünschte Wechselwirkung mit den zu distanzierenden Stückgütern ermöglicht wird.

Die Wirkungsweise dieses rotierenden Sterns 34 sowie seine Wechselwirkung mit den Stückgütern 14 beim Auftauchen des Einteilfingers 24 über das Höhenniveau der Auflage- und/oder Förderebene 18 der Horizontalfördereinrichtung 20 soll im Folgenden unter Bezugnahme auf die Figuren 1A bis 1G noch genauer erläutert werden.

Wie schon oben erläutert, erfolgt jede Beabstandung der zunächst lückenlos hintereinander in Förderrichtung 16 (von rechts nach links) mit gleichmäßiger Fördergeschwindigkeit v₁ transportierten Stückgüter 14, indem mit der Einteileinrichtung 22 eine definierte Lücke 38 (vgl. Fig. 1G) zwischen zwei zunächst ohne Abstand hintereinander beförderte Stückgüter 14a und 14b geschaffen wird. D.h. es werden ein Stückgut 14b sowie alle weiteren hinter diesem Stückgut 14b transportierten Stückgüter 14c etc. von wenigstens dem in Förderrichtung 16 vorauslaufenden Stückgut 14a mittels der durch die Auflage- und/oder Förderebene 18 nach oben hindurchgreifenden und sich zumindest phasenweise gegenüber dieser mit reduzierter Geschwindigkeit bzw. mit der Einteilgeschwindigkeit v₂ in Förderrichtung 16 bewegenden Einteileinrichtung 22 distanziert und gegenüber dem vorauslaufenden Stückgut 14a sowie gegenüber der sich fortbewegenden Auflage- und/oder Förderebene 18 verzögert.

Wie es die Figuren 1A bis 1G erkennen lassen, umfasst die Einteileinrichtung 22 eine an sich bekannte umlaufende Führung 40 für den zyklisch nach oben auftauchenden Einteilfinger 24, die einen Kettenantrieb sowie Kulissenführungen aufweist, so dass der Einteilfinger 24 in einer Taktung, die insbesondere an die Fördergeschwindigkeit v₁ der Auflage- und/oder Förderebene 18 sowie an die Größen bzw. Längen der jeweils transportierten Stückgüter 14 angepasst sein kann, an einer definierten Stelle nach oben auftaucht, die Lücken 38 zieht und anschließend wieder an exakt definierter Stelle nach unten abtaucht, um für den nächsten Zyklus erneut aufzutauchen und eine weitere Lücke 38 zu ziehen. Da diese Art der Führungen 40 bekannt ist, kann an dieser Stelle auf eine detaillierte Beschreibung verzichtet werden.

Bei der Herstellung der gewünschten Lücken 38 im Produktstrom oder Stückgutstrom ist es keineswegs ausgeschlossen, dass die Einteileinrichtung 22 genau in eine schon vorhandene Lücke 38 zwischen aufeinanderfolgend beförderten Stückgütern 14a und 14b eingreift, da es vorkommen kann, dass die Stückgüter 14 nicht immer lückenlos hintereinander befördert werden, sondern teilweise gering voneinander beabstandet sind, ggf. auch mit unterschiedlichen Abständen voneinander. Wenn dies der Fall ist und der Einteilfinger 24 beim Auftauchen eine solche Lücke 38 trifft, so kommt das zu verzögernde Stückgut 14b bereits kurz nach dem Anheben der Einteileinrichtung 22 aufgrund deren geringerer Einteilgeschwindigkeit v₂ an einer Anlagefläche 42 oder -kante des Einteilfingers 24 der Einteileinrichtung 22 zu Anlage, wodurch das dort anliegende Stückgut 14b unter unmittelbarer Ausbildung einer Lücke 38 in gewünschter Größe zum vorauslaufenden Stückgut 14a gegenüber der mit höherer Fördergeschwindigkeit v₁ laufenden Auflage- und/oder Förderebene 18 verzögert wird.

Unter der im Normalfall gegebenen Voraussetzung des lückenlosen Transports der Stückgüter 14 (vgl. Fig. 1A) wird das dem zu verzögernden Stückgut 14b vorauslaufende Stückgut 14a (in Fig. 1A links) von der sich über die Auflage- und/oder Förderebene 18 nach oben hinausbewegenden Einteileinrichtung 22 kippend angehoben (vgl. Fig. 1B), wobei der passiv, d.h. ohne eigenen Antrieb rotierende Stern 34, der am Einteilfinger 24 drehbar gelagert ist, seine Zacken 36 entsprechend Fig. 1B so dreht, dass die Zacken 36 nur geringfügig über die obere Stirnseite des Einteilfingers 24 hinausragen.

Im weiteren Förderverlauf übersteigt das vorauslaufende Stückgut 14a die Einteileinrichtung unter der Wirkung der weiteren Fortbewegung der Auflage- und/oder Förderebene 18 sowie unter der Einwirkung des Staudrucks des nächstfolgenden 14b, wie dies die Figuren 1C bis 1G anhand von aufeinanderfolgenden Prozessphasen der Lückenbildung verdeutlichen. Das vorauslaufende Stückgut 14a wird hierbei kippend angehoben, wobei seine vordere Bodenkante 26 weiterhin auf der Auflage- und/oder Förderebene 18 aufliegt und von dieser mitgezogen wird, ggf. unter erhöhtem Schlupf, so dass das vordere Stückgut 14a in dieser anfänglichen Phase der Lückenbildung ggf. noch nicht vom nachfolgenden Stückgut 14b distanziert werden kann.

Die Ausbildung des Rotationselements 28 als dreizackigen Stern 34 ermöglicht die exakte Lückenbildung im weiteren Förderverlauf, wie dies anhand der Fig. 1C deutlich wird. Hierbei gleitet das vordere Stückgut 14a zunächst bei nicht rotierendem Stern 34 weiter in seiner nach vorne gekippten Lage und wird mit seiner vorderen Bodenkante 26 von der Auflage- und/oder Förderebene 18 mitgezogen und gleichzeitig vom nachfolgenden Stückgut 14b weiter über den Einteilfinger 24 geschoben.

Sobald nun das dem kippend angehobenen ersten Stückgut 14a folgende Stückgut 14b den Stern 34 erreicht (vgl. Fig. 1D) und die frontseitige vertikale Seitenfläche 44 des Stückguts 14b den gegenüber der Förderrichtung 16 nach hinten weisenden Zacken 36 erreicht, wird die Drehung des Rotationselements 28 bzw. des Sterns 34 eingeleitet, da die vordere Seitenfläche 44 den Zacken 36 nach oben und nach vorne schiebt, wodurch der Stern 34 in eine Linksdrehung 46 versetzt wird. Der von der vorderen Seitenfläche 44 nach oben und vorne verschobene Zacken 36 des solchermaßen in Linksdrehung 46 rotierende Sterns 34 hebt gleichzeitig den Boden des vorauslaufenden Stückguts 14a noch etwas weiter an, wodurch dessen rückseitige Seitenfläche 48 ggf. geringfügig von der vorderen Seitenfläche 44 des nachfolgenden Stückguts 14b distanziert wird.

Unter dem weiter wirkenden Staudruck des zweiten Stückguts 14b sowie der diesem nachfolgenden Stückgüter 14c etc. dreht sich der Stern 34 weiter (vgl. Fig. 1E), bis der vom nachfolgenden Stückgut 14b kontaktierte Zacken 36 ungefähr vertikal nach oben steht, während der entgegen der Drehrichtung 46 folgende Zacken 36 mit seiner gewölbten oder konvex geknickten Rückseite unterhalb der Bodenfläche des Stückguts 14b liegt. Das weitergeschobene Stückgut 14b dreht den Stern 34 um einen kleinen Winkel weiter in Linksdrehung 46, bis seine vordere untere Bodenkante 26 an der Anlagefläche 42 des Einteilfingers 24 anliegt (vgl. Fig. 1F). Dort befindet sich genau auf der Höhe der Auflage- und/oder Förderebene 18 eine Stufe, die zudem mit dem Zwischenraum zwischen zwei benachbarten Zacken 36 des Sterns 34 korrespondiert, so dass dort die vordere untere Bodenkante 26 des vom Einteilfinger 24 verzögerten Stückguts 14b hineinpasst.

Die Figuren 1E und 1F lassen erkennen, dass gleichzeitig das vorauslaufende Stückgut 14a unter Wirkung der Haftreibung zwischen seiner vorderen Bodenkante 26 und der Oberfläche der Auflage- und/oder Förderebene 18 mitgezogen und von der nach vorne in Förderrichtung 16 weisenden gewölbten oder konvex geknickten Rückseite des nach oben weisenden Zackens 36 des Sterns 34 heruntergezogen wird, bis es gemäß Fig. 1G dort heruntergleitet und flach auf der Auflage- und/oder Förderebene 18 aufliegend mit dessen Fördergeschwindigkeit v₁ weiterbefördert wird. Zwischen diesem ersten Stückgut 14a und dem nachfolgenden Stückgut 14b wird nun die Lücke 38 hergestellt, da das Stückgut 14b nicht mehr mit der Fördergeschwindigkeit v₁ transportiert wird, sondern aufgrund seiner Anlage an der Stufe der Anlagefläche 42 des Einteilfingers 24 bei nun nicht mehr rotierendem Stern 34 mit der geringeren Einteilgeschwindigkeit v₂ der in Förderrichtung 16 bewegten Einteileinrichtung 22 bewegt wird. Auch die nachfolgenden Stückgüter 14c etc. werden während der Auftauchphase des Einteilfingers 24 mit dieser geringeren Einteilgeschwindigkeit v₂ befördert, da sie am abgebremsten Stückgut 14b anliegen.

Diese Verzögerung der Stückgüter 14b und 14c mittels der Einteileinrichtung 22 dauert solange, bis der Einteilfinger 24 durch die definierte Länge der umlaufenden Führung 40 wieder nach unten unter das Höhenniveau der Auflage- und/oder Förderebene 18 abtaucht (hier nicht gezeigt). Die Stückgüter 14b und 14c sowie ggf. weitere Stückgüter 14, die sich daran anschließen, können nach Abtauchen des Einteilfingers 24 wieder mit der erhöhten Fördergeschwindigkeit v₁ der sich unverändert fortbewegenden Auflage- und/oder Förderebene 18 transportiert werden.

Es sei an dieser Stelle darauf hingewiesen, dass die hier beschriebenen Figuren 1A bis 1G schematisch zu verstehen sind; je nach Breite der Stückgüter 14 können auch für jede Transportbahn zwei parallele Einteileinrichtungen 22 vorgesehen sein, die gleich aufgebaut sind und synchron in jeweiligen umlaufenden Führungen 40 bewegt werden.

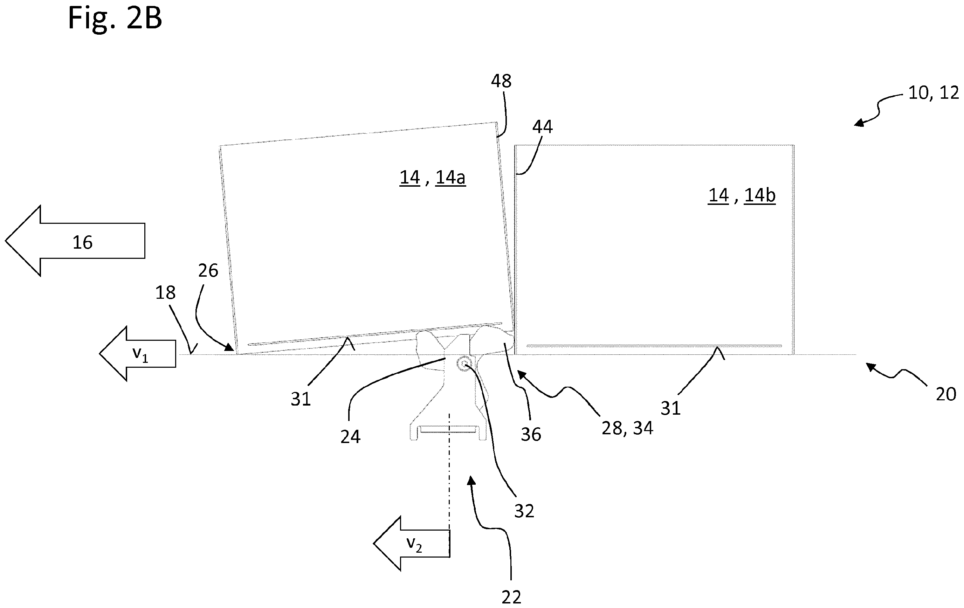

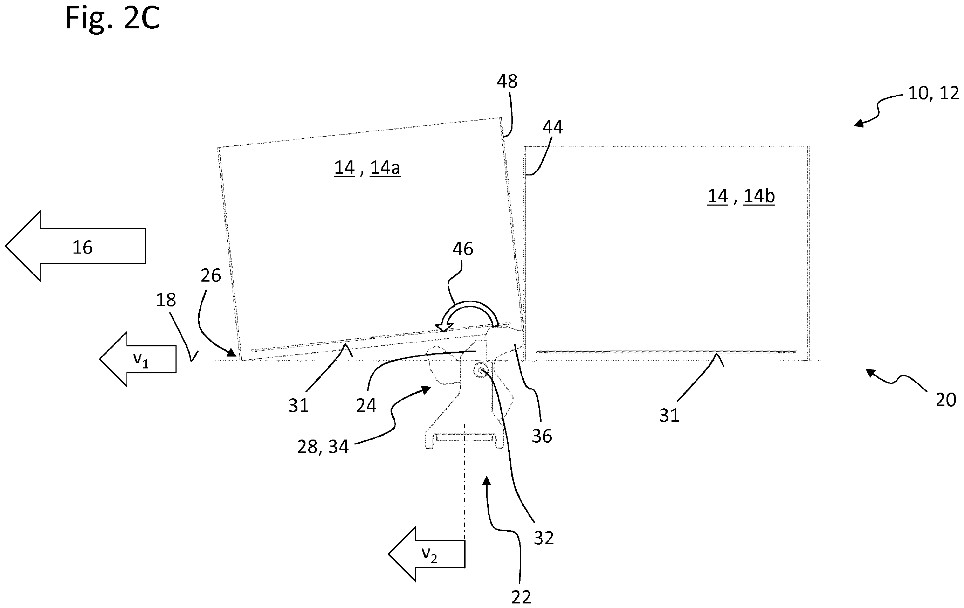

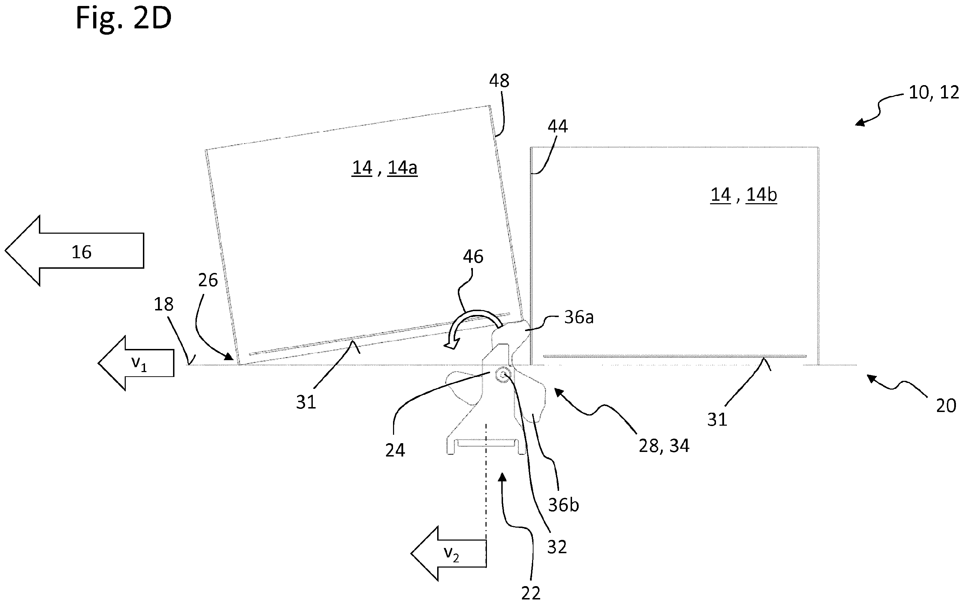

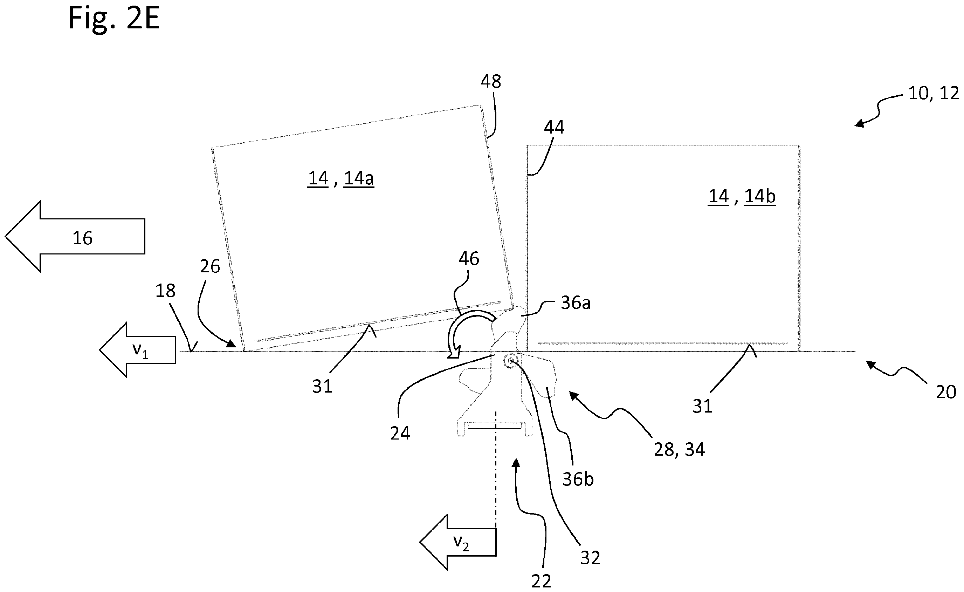

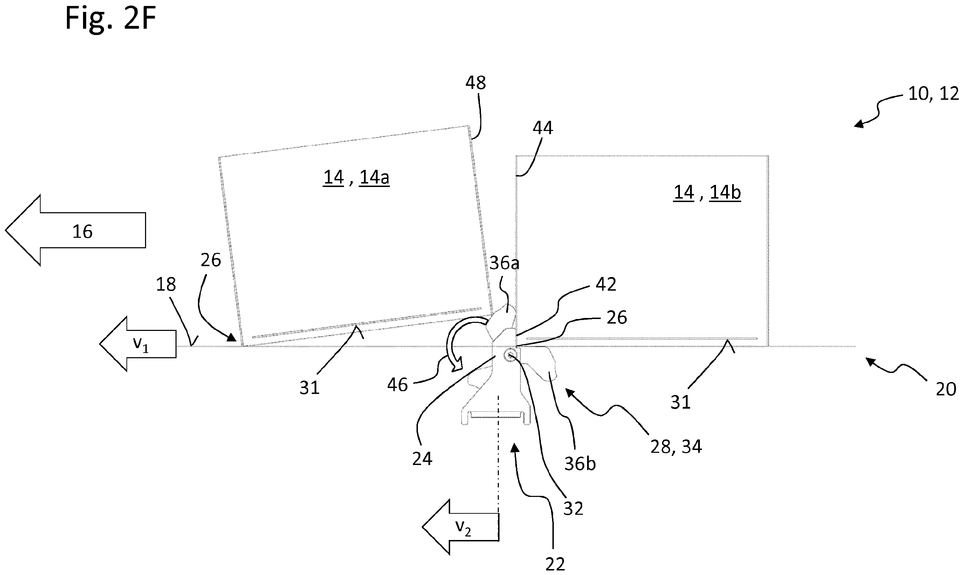

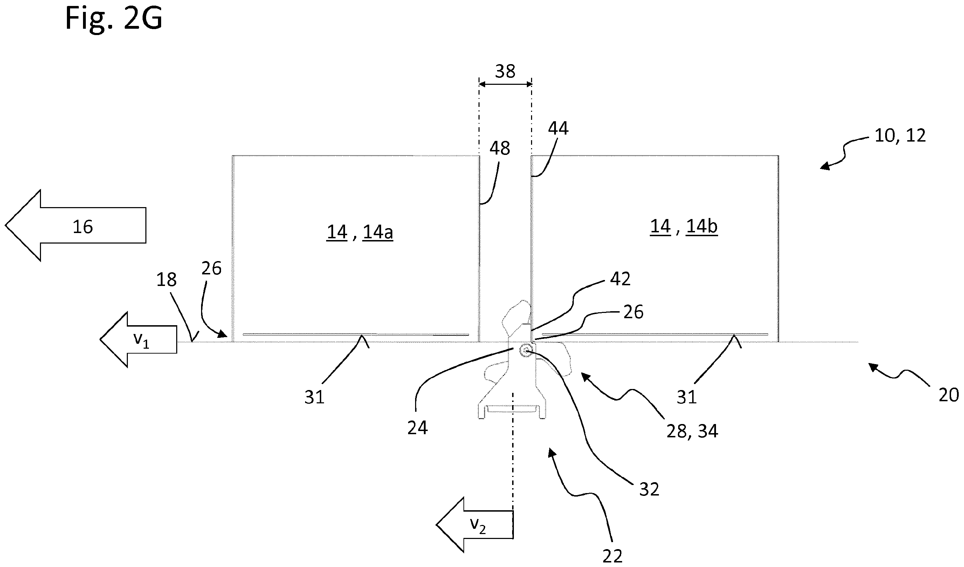

Die insgesamt sieben schematischen Seitenansichten der Fig. 2 (Fig. 2A, Fig. 2B, Fig. 2C, Fig. 2D, Fig. 2E, Fig. 2F und Fig. 2G) sollen aufeinanderfolgende Prozessphasen einer gegenüber der anhand der Figuren 1A bis 1G illustrierten ersten Verfahrensvariante leicht abgewandelten zweiten Verfahrensvariante zur Lückenbildung verdeutlichen, wobei die nachfolgend beschriebene Verfahrensvariante wiederum mittels einer Ausführungsvariante des erfindungsgemäßen Transportabschnittes zur Beförderung von Stückgütern durchgeführt wird.

Auch hier gilt wiederum, dass sich die in den Figuren 2A bis 2G in Detailausschnitten gezeigte Transportstrecke 12 insbesondere in einer hier nicht näher veranschaulichten und deshalb nicht mit einer Bezugsziffer gekennzeichneten Handhabungs- und/oder Verpackungsmaschine (vgl. Fig. 4) befinden und insofern integraler Bestandteil einer wie auch immer gearteten und ausgestalteten Handhabungs- und/oder Verpackungsmaschine sein kann, in der die Stückgüter 14 in der gezeigten Weise transportiert werden, um sie in hier nicht gezeigten nachgeordneten Handhabungs- und/oder Verpackungsstationen zu verpacken oder auf sonstige Weise weiterzuverarbeiten, bspw. auch zu palettieren.

Auch bei der mit den Figuren 2A bis 2G veranschaulichten Prozessvariante ist der einen Teil des Horizontalförderabschnittes 10 bildenden Auflage- und/oder Förderebene 18 eine durch diese Ebene 18 mit den darauf liegend oder stehend beförderten Stückgütern 14 nach oben hindurchgreifende und sich zumindest phasenweise gegenüber der Fördergeschwindigkeit v₁ der Auflage- und/oder Förderebene 18 mit reduzierter Einteilgeschwindigkeit v₂ in Förderrichtung 16 bewegende Einteileinrichtung 22 zugeordnet, die in der Lage ist, ein Stückgut 14, 14b oder mehrere hintereinander beförderte Stückgüter 14 von den in Förderrichtung 16 vorauslaufenden Stückgütern 14, 14a zu distanzieren und gegenüber dem vorauslaufenden Stückgut 14, 14a oder den vorauslaufenden Stückgütern 14, 14a sowie gegenüber der sich fortbewegenden Auflage- und/oder Förderebene 18 zu verzögern. Die Figuren 2A bis 2G zeigen jeweils nur ein vorauslaufendes Stückgut 14, 14a sowie ein nachfolgendes Stückgut 14, 14b, das mittels Einteileinrichtung 22 vom vorauslaufenden Stückgut 14, 14a distanziert wird.

Wie schon anhand der Figuren 1A bis 1G verdeutlicht, umfasst auch bei der hier beschriebenen Variante die Einteileinrichtung 22 mindestens einen durch die Auflage- und/oder Förderebene 18 abschnittsweise nach oben hindurchgreifenden und sich zumindest phasenweise gegenüber der Fördergeschwindigkeit v₁ der Auflage- und/oder Förderebene 18 mit der geringeren Einteilgeschwindigkeit v₂ in Förderrichtung 16 bewegenden Einteilfinger 24, der während der Einteilphase, bei der die Einteileinrichtung 22 über das Höhenniveau der Auflage- und/oder Förderebene 18 gehoben ist und auf diese Weise das aktuell über dem angehobenen Einteilfinger 24 befindliche Stückgut 14, 14a ebenfalls anhebt, so dass dieses leicht nach vorne kippt und mit der nicht angehobenen vorderen Bodenkante 26 weiterhin auf der Auflage- und/oder Förderebene 18 der Horizontalfördereinrichtung 20 liegt (vgl. Figuren 2A bis 2F). Die nicht vom Einteilfinger 24 der Einteileinrichtung 22 angehobenen Stückgüter 14, 14b liegen dagegen flächig auf der Auflage- und/oder Förderebene 18 auf und werden weiterhin mit der Fördergeschwindigkeit v₁ in Förderrichtung 16 bewegt (vgl. Figuren 2A bis 2E), bis sie vom Einteilfinger 24 erfasst und auf die Einteilgeschwindigkeit v₂ abgebremst werden (vgl. Figuren 2F und 2G).

Die schematischen Seitenansichten der Figuren 2A bis 2G lassen das bereits anhand der Figuren 1A bis 1G erläuterte Rotationselement 28 erkennen, das oberseitig am Einteilfinger 24 angeordnet ist, und das in der nachfolgend näher erläuterten Weise mit der Bodenfläche 31 des dem zurückzuhaltenden Stückgut 14b vorauslaufenden Stückgutes 14a wechselwirken kann. Im Unterschied zur oben erläuterten ersten Verfahrensvariante handelt es sich bei den hier zu distanzierenden Stückgütern 14, 14a, 14b um solche mit strukturierten Böden 31 oder mit Bodenflächen 31, die Lücken aufweisen können, in die sich herkömmliche Einteilfinger leicht verhaken und dadurch in ihrer Einteilfunktion gestört werden könnten. Wie es die Figuren 2A bis 2G jeweils erkennen lassen, kann die Bodenfläche 31 jedes einzelnen Stückgutes 14, 14a, 14b jeweils höher liegen als die auf der Auflage- und/oder Förderebene 18 aufliegenden Unterkanten der Seitenflächen der Stückgüter 14, 14a, 14b, so bspw. die frontseitige oder vordere vertikale Seitenfläche 44 eines nachfolgenden Stückgutes 14b oder die hintere Seitenfläche 48 des vorauslaufenden Stückgutes 14a.

Wie bereits oben erläutert, kann das Rotationselement 28 des Einteilfingers 24 um seine Achse 32 rotieren, die bei nach oben bewegtem Einteilfinger 24 leicht unterhalb des Höhenniveaus der Auflage- und/oder Förderebene 18 der Horizontalfördereinrichtung 20 liegt. Zudem liegt die Achse 32, um die das Rotationselement 28 rotieren kann, ungefähr horizontal und im Wesentlichen quer zur Förderrichtung 16. Im gezeigten Ausführungsbeispiel weist das Rotationselement 28 eine Strukturierung an seinem Außenumfang auf und ist durch einen Stern 34 mit drei gleich geformten Zacken 36 gebildet, wodurch die gewünschte Wechselwirkung mit den zu distanzierenden Stückgütern ermöglicht wird.

Die Wirkungsweise dieses rotierenden Sterns 34 sowie seine Wechselwirkung mit den Stückgütern 14 und insbesondere mit deren strukturierten oder lückenbehafteten Böden 31 beim Auftauchen des Einteilfingers 24 über das Höhenniveau der Auflage- und/oder Förderebene 18 der Horizontalfördereinrichtung 20 soll im Folgenden unter Bezugnahme auf die Figuren 2A bis 2G genauer erläutert werden.

Wie schon oben erläutert, erfolgt jede Beabstandung der zunächst lückenlos hintereinander in Förderrichtung 16 (von rechts nach links) mit gleichmäßiger Fördergeschwindigkeit v₁ transportierten Stückgüter 14, indem mit der Einteileinrichtung 22 eine definierte Lücke 38 (vgl. Fig. 2G) zwischen zwei zunächst ohne Abstand hintereinander beförderten Stückgütern 14a und 14b geschaffen wird. D.h. es werden ein Stückgut 14b sowie alle weiteren hinter diesem Stückgut 14b transportierten Stückgüter (hier nicht dargestellt) von dem oder von wenigstens einem in Förderrichtung 16 vorauslaufenden Stückgut 14a mittels der durch die Auflage- und/oder Förderebene 18 nach oben hindurchgreifenden und sich zumindest phasenweise gegenüber dieser mit reduzierter Geschwindigkeit bzw. mit der Einteilgeschwindigkeit v₂ in Förderrichtung 16 bewegenden Einteileinrichtung 22 distanziert und gegenüber dem vorauslaufenden Stückgut 14a sowie gegenüber der sich fortbewegenden Auflage- und/oder Förderebene 18 verzögert.

Zur umlaufenden Bewegungsführung 40 der Einteileinrichtung 22 sei auf die Figuren 1A bis 1G verwiesen, wo diese in Teilen erkennbar ist. Die dort gezeigte Führung 40 erlaubt ein zyklisches Auftauchen des Einteilfingers 24, wodurch dieser in seiner Taktung, die insbesondere an die Fördergeschwindigkeit v₁ der Auflage- und/oder Förderebene 18 sowie an die Größen bzw. Längen der jeweils transportierten Stückgüter 14, 14a, 14b angepasst sein kann, an einer definierten Stelle nach oben auftaucht, die Lücken 38 zieht und anschließend wieder an exakt definierter Stelle nach unten abtaucht, um für den nächsten Zyklus erneut aufzutauchen und eine weitere Lücke 38 zu ziehen.

Unter der hier betrachteten Voraussetzung des annähernd lückenlosen Transports der Stückgüter 14, 14a, 14b (vgl. Fig. 2A) wird das dem zu verzögernden Stückgut 14b vorauslaufende Stückgut 14a (in Fig. 2A links) von der sich über die Auflage- und/oder Förderebene 18 nach oben hinausbewegenden Einteileinrichtung 22 kippend angehoben (vgl. Fig. 2A, Fig. 2B), wobei der passiv, d.h. ohne eigenen Antrieb rotierende Stern 34, der am Einteilfinger 24 drehbar gelagert ist, seine Zacken 36 entsprechend Fig. 2B unter der Wirkung des darauf liegenden Stückgutbodens 31 so dreht, dass die Zacken 36 nur geringfügig über die obere Stirnseite des Einteilfingers 24 hinausragen.

Im weiteren Förderverlauf übersteigt das vorauslaufende Stückgut 14a die Einteileinrichtung 22 unter der Wirkung der weiteren Fortbewegung der Auflage- und/oder Förderebene 18 sowie unter der Einwirkung des Staudrucks des nächstfolgenden Stückguts 14b, wie dies die Figuren 2C bis 2G anhand von aufeinander folgenden Prozessphasen der Lückenbildung verdeutlichen. Das vorauslaufende Stückgut 14a wird hierbei kippend angehoben, wobei seine vordere Bodenkante 26 weiterhin auf der Auflage- und/oder Förderebene 18 aufliegt und von dieser mitgezogen wird, ggf. unter erhöhtem Schlupf, so dass das vordere Stückgut 14a in dieser anfänglichen Phase der Lückenbildung ggf. noch nicht vom nachfolgenden Stückgut 14b distanziert werden kann.

Die Ausbildung des Rotationselements 28 als dreizackigen Stern 34 ermöglicht nicht nur die angestrebte exakte Lückenbildung im weiteren Förderverlauf, wie dies anhand der Fig. 2C deutlich wird. Die Strukturierung des Rotationselements 28 und seine Formgebung verhindern auch effektiv Störungen bei der Lückenbildung zwischen Stückgütern 14, 14a, 14b mit ihren hier gezeigten lückenbehafteten oder strukturierten Bodenflächen 31, in die herkömmliche Einteilfinger leicht einhaken könnten, was einen weiteren gleitenden Transport des vorauslaufenden Stückguts 14a verhindern und leicht zu Störungen im angestrebten Lückenbildungsprozess führen könnte.

Wie es die Figuren 2A und 2B zeigen, gleitet das vorauslaufende vordere Stückgut 14a zunächst bei nicht rotierendem Stern 34 der Einteileinrichtung 22 weiter in seiner nach vorne gekippten Lage und wird mit seiner vorderen Bodenkante 26 von der Auflage- und/oder Förderebene 18 mitgezogen und gleichzeitig vom nachfolgenden Stückgut 14b weiter über den Einteilfinger 24 bzw. über zwei Kontaktflächen des in dieser Phase nicht rotierenden Sterns 34 geschoben.

Sobald nun das dem kippend angehobenen ersten Stückgut 14a folgende Stückgut 14b den Stern 34 erreicht (vgl. Fig. 2B, Fig. 2C) und die frontseitige vertikale Seitenfläche 44 des Stückguts 14b den gegenüber der Förderrichtung 16 nach hinten weisenden Zacken 36 erreicht (vgl. Fig. 2B), wird die Drehung des Rotationselements 28 bzw. des Sterns 34 eingeleitet, da die vordere Seitenfläche 44 den Zacken 36 nach oben und nach vorne schiebt, wodurch der Stern 34 in eine Linksdrehung 46 versetzt wird (vgl. Fig. 2C). Der von der vorderen Seitenfläche 44 nach oben und vorne verschobene Zacken 36 des solchermaßen in Linksdrehung 46 rotierende Sterns 34 hebt gleichzeitig den Boden 31 des vorauslaufenden Stückguts 14a noch etwas weiter an, wodurch dessen rückseitige Seitenfläche 48 geringfügig von der vorderen Seitenfläche 44 des nachfolgenden Stückguts 14b distanziert wird (vgl. Fig. 2D).

Unter dem weiter wirkenden Staudruck des zweiten Stückguts 14b sowie der diesem nachfolgenden Stückgüter (hier nicht gezeigt) dreht sich der Stern 34 weiter (vgl. Fig. 2E), bis der vom nachfolgenden Stückgut 14b kontaktierte Zacken 36a ungefähr vertikal nach oben steht, während der entgegen der Drehrichtung 46 folgende Zacken 36b mit seiner gewölbten oder konvex geknickten Rückseite unterhalb der Bodenfläche des Stückguts 14b liegt (vgl. Fig. 2F). Das weitergeschobene Stückgut 14b dreht den Stern 34 um einen kleinen Winkel weiter in Linksdrehung 46, bis seine vordere untere Bodenkante 26 an der Anlagefläche 42 des Einteilfingers 24 anliegt (vgl. Fig. 2F). Dort befindet sich genau auf der Höhe der Auflage- und/oder Förderebene 18 eine Stufe, die zudem exakt mit dem Zwischenraum zwischen zwei benachbarten Zacken 36a und 36b des Sterns 34 korrespondiert, so dass dort die vordere untere Bodenkante 26 des vom Einteilfinger 24 verzögerten Stückguts 14b hineinpasst.

Die Figuren 1E und 1F lassen erkennen, dass gleichzeitig das vorauslaufende Stückgut 14a unter Wirkung der Haftreibung zwischen seiner vorderen Bodenkante 26 und der Oberfläche der Auflage- und/oder Förderebene 18 mitgezogen und von der nach vorne in Förderrichtung 16 weisenden gewölbten oder konvex geknickten Rückseite des nach oben weisenden Zackens 36a des Sterns 34 heruntergezogen wird, bis es gemäß Fig. 2G dort heruntergleitet und flach auf der Auflage- und/oder Förderebene 18 aufliegend mit dessen Fördergeschwindigkeit v₁ weiterbefördert wird. Zwischen diesem ersten Stückgut 14a und dem nachfolgenden Stückgut 14b wird nun die Lücke 38 hergestellt, da das Stückgut 14b nicht mehr mit der Fördergeschwindigkeit v₁ transportiert wird, sondern aufgrund seiner Anlage an der Stufe der Anlagefläche 42 des Einteilfingers 24 bei nun nicht mehr rotierendem Stern 34 mit der geringeren Einteilgeschwindigkeit v₂ der in Förderrichtung 16 bewegten Einteileinrichtung 22 bewegt wird. Auch die hier nicht gezeigten nachfolgenden Stückgüter werden während der Auftauchphase des Einteilfingers 24 mit dieser geringeren Einteilgeschwindigkeit v₂ befördert, da sie am abgebremsten Stückgut 14b anliegen.

Der Stern 34 wird hierbei aufgrund seines an der Bodenfläche 31 des nach an der Kante 42 des Einteilfingers 24 anliegenden Stückguts 14b anliegenden Zackens 36b sowie aufgrund des nicht mehr vom vorauslaufenden Stückgut 14a kontaktierten Zackens 36a (Fig. 2G) nicht mehr gedreht, sondern steht in dieser Prozessphase still.

Diese Verzögerung der Stückgüter 14b (und nachfolgende) mittels der Einteileinrichtung 22 dauert solange, bis der Einteilfinger 24 durch die definierte Länge der umlaufenden Führung 40 (vgl. Figuren 1A bis 1G) wieder nach unten unter das Höhenniveau der Auflage- und/oder Förderebene 18 abtaucht (dort nicht gezeigt). Die Stückgüter 14b und folgende sowie ggf. weitere Stückgüter 14, die sich daran anschließen, können nach Abtauchen des Einteilfingers 24 wieder mit der erhöhten Fördergeschwindigkeit v₁ der sich unverändert fortbewegenden Auflage- und/oder Förderebene 18 transportiert werden.

Auch hier sei wieder darauf hingewiesen, dass die Figuren 2A bis 2G schematisch zu verstehen sind; je nach Breite der Stückgüter 14, 14a, 14b können auch für jede Transportbahn zwei parallele Einteileinrichtungen 22 vorgesehen sein, die gleich aufgebaut sind und synchron in jeweiligen umlaufenden Führungen 40 bewegt werden.

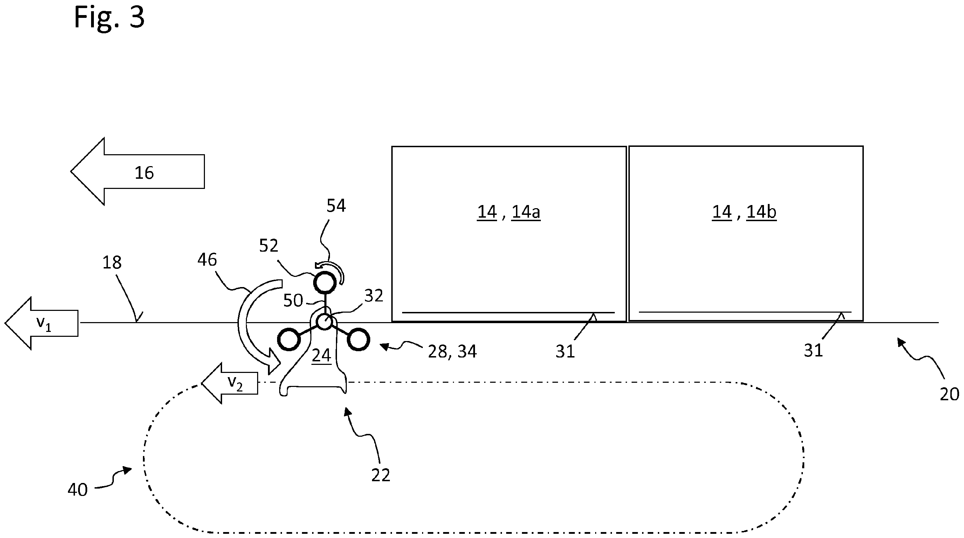

Die schematische Seitenansicht der Fig. 3 zeigt eine weitere Variante, bei der das Rotationselement 28 durch einen drehbar am Einteilfinger 24 der Einteileinrichtung 22 um die Achse 32 gelagerter Stern 34 mit drei Fingern 50 und jeweils daran drehbar gelagerten Rollen 52 gebildet ist. Hierbei ist der Stern 34 nicht nur um die Achse 32 drehbar in typischerweise nach links gerichteter Drehrichtung 46 am Einteilfinger 24 gelagert, sondern auch die insgesamt drei Rollen 52 selbst sind an den Fingern 50 jeweils frei drehbar gelagert, und zwar in beliebige Drehrichtung 54. Die Drehachsen der Rollen 52 an den Fingern 50 liegen hierbei jeweils parallel zur zentralen Drehachse 32 des Sterns 34.

Der übrige Aufbau der Einteileinrichtung 22 und ihr Zusammenwirken mit dem Horizontalförderabschnitt 10 der Transportstrecke 12 entspricht weitgehend den zuvor beschriebenen Ausführungsvarianten gemäß Fig. 1A bis Fig. 2G, so dass insofern auf die entsprechenden Beschreibungspassagen verwiesen werden kann.

Die Stückgüter 14, 14a und 14b werden dabei in gleicher Weise durch den von unten durch die Auflage- und/oder Förderebene 18 der Horizontalfördereinrichtung 20 auftauchenden Einteilfinger 24 mit dem drehbaren Stern 34 angehoben und voneinander beabstandet, bis eine gewünschte Lücke gebildet ist (vgl. Fig. 1G und Fig. 2G). Die Wirkungsweise des durch den Stern 34 mit den drei Rollen 52 gebildeten Rotationselements 28 unterscheidet sich dabei nicht wesentlich von dem Rotationselement 28, wie es in den Figuren 1A bis 2G gezeigt ist.

Der besondere Vorteil der in den Figuren 1A bis 3 anhand verschiedener Ausführungsvarianten gezeigten Anordnung besteht darin, dass ein mehrbahniger Betrieb (vgl. z.B. Fig. 4) problemlos möglich ist, während die aus dem Stand der Technik bekannten seitlich zustellbaren Pneumatikzylinder in der Regel nur einen zweibahnigen Betrieb zulassen, bei dem die Stückgüter unmittelbar nebeneinander befördert werden, da sie bei zugestellten Pneumatikzylindern mit ihren zueinander weisenden Seitenflächen aneinander gedrückt werden. Da eine solche Wechselwirkung bei der erfindungsgemäßen Anordnung nicht stattfindet, können wahlweise auch drei, vier oder mehr parallele Bahnen mit Stückgütern 14 betrieben werden, bei denen die Lückenbildung jeweils in der gezeigten Weise stattfinden kann.

In Fig. 4 ist eine zweibahnige Transportstrecke 12 gezeigt, welche zwei Spuren aufweist und bei der Stückgüter 14 jeweils auf zwei Spuren voneinander beabstandet werden. Die Spuren 150 verlaufen bevorzugt parallel zueinander. Die Stückgüter 14 werden von einer ersten Verpackungsvorrichtung 100 zu einer zweiten Verpackungsvorrichtung 200 transportiert.

Bei der ersten Verpackungsvorrichtung 100 kann es sich bspw. um eine Maschine handeln, welche Getränkebehälter, wie z.B. Flaschen, in Kartonverpackungen einsetzen kann. Insbesondere kann vorgesehen sein, dass diese Maschine oder erste Verpackungsvorrichtung 100 taktweise arbeiten und eine Handhabungsvorrichtung aufweisen kann, welche Getränkebehälter anhebt und von oben in ein Karton einsetzt. Die Getränkebehälter enthaltenden Kartonverpackungen sind die genannten Stückgüter 14.

Bei der zweiten Verpackungsvorrichtung 200 kann es sich bspw. um einen kontinuierlich arbeitenden Packer handeln, welcher die Getränkebehälter enthaltenden Kartonverpackungen einzeln oder mehrere Stück in einen weiteren Karton (z.B. Tray oder Wrap-Around-Karton, jeweils mit oder ohne zusätzliche Folienverpackung) oder direkt in eine Folienverpackung (z.B. Schrumpffolie) verpackt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Horizontalförderabschnitt
- 12: Transportstecke
- 14: Stückgut
- 14a: erstes Stückgut, vorderes Stückgut
- 14b: zweites Stückgut, nachfolgendes Stückgut, zu verzögerndes Stückgut
- 14c: drittes Stückgut, weiteres Stückgut
- 16: Förderrichtung
- 18: Auflageebene, Förderebene, Auflage- und/oder Förderebene
- 20: Fördereinrichtung, Horizontalfördereinrichtung
- 22: Einteileinrichtung
- 24: Einteilfinger
- 26: vordere Bodenkante
- 28: Rotationselement
- 30: Bodenfläche
- 31: strukturierte Bodenfläche, Bodenfläche mit Lücken
- 32: Achse, Rotationsachse
- 34: Stern, rotierender Stern
- 36: Zacken
- 38: Lücke, Abstand
- 40: Führung, umlaufende Führung, Bewegungsführung
- 42: Anlagefläche, Anlagekante
- 44: frontseitige vertikale Seitenfläche, vordere Seitenfläche
- 46: Linksdrehung, Drehrichtung, linke Drehrichtung
- 48: rückseitige Seitenfläche
- 50: Finger
- 52: Rolle
- 54: Drehrichtung

- v₁: Fördergeschwindigkeit
- v₂: Einteilgeschwindigkeit

## Patentansprüche

1. Transportstrecke (12) einer Handhabungs- und/oder Verpackungsmaschine, die einen Horizontalförderabschnitt (10) mit einer sich in einer Förderrichtung (16) bewegenden Auflage- und/oder Förderebene (18) zur annähernd lückenlosen oder gering voneinander beabstandeten Beförderung von Stückgütern (14; 14a, 14b, 14c) hintereinander in Förderrichtung (16) umfasst,
- welcher Auflage- und/oder Förderebene (18) eine durch diese nach oben hindurchgreifende und sich zumindest phasenweise gegenüber der Auflage- und/oder Förderebene (18) mit reduzierter Geschwindigkeit (v₂) in Förderrichtung (16) bewegende Einteileinrichtung (22) zugeordnet ist, die wenigstens ein Stückgut (14, 14b) von wenigstens einem weiteren, in Förderrichtung (16) vorauslaufenden Stückgut (14, 14a) distanzieren und gegenüber dem vorauslaufenden Stückgut (14, 14a) sowie gegenüber der sich fortbewegenden Auflage- und/oder Förderebene (18) verzögern kann,
- welche Einteileinrichtung (22) wenigstens einen durch die Auflage- und/oder Förderebene (18) abschnittsweise nach oben hindurchgreifenden und sich zumindest phasenweise gegenüber der Auflage- und/oder Förderebene (18) mit reduzierter Geschwindigkeit (v₂) in Förderrichtung (16) bewegenden Einteilfinger (24) mit mindestens einem mit einer Bodenfläche des dem zurückzuhaltenden Stückgut (14, 14b) vorauslaufenden Stückgutes (14, 14a) wechselwirkenden Rotationselement (28) aufweist, die Transportstrecke (12) **dadurch gekennzeichnet, dass** das Rotationselement (28) eine Strukturierung an seinem Außenumfang aufweist und durch einen Stern (34) mit mindestens zwei Zacken (36) gebildet ist.

2. Transportstrecke nach Anspruch 1, bei der das mindestens eine Rotationselement (28) des Einteilfingers (24) um eine Achse (32) rotieren kann, die ungefähr horizontal und im Wesentlichen quer zur Förderrichtung (16) liegt.

3. Transportstrecke nach Anspruch 1 oder Anspruch 2, bei welcher das Rotationselement (28) durch einen Stern (34) mit drei Zacken (36) gebildet ist.

4. Transportstrecke (12) nach einem der Ansprüche 1 bis 3, bei welcher es sich bei dem Horizontalförderabschnitt (10) um eine Horizontalfördereinrichtung mit einer sich in Transportrichtung bewegenden Auflage- und/oder Förderebene (18) handelt, welche Horizontalfördereinrichtung (20) durch endlose umlaufende Mattenkettenförderer, Gliederbänder oder Mattenförderer ausgebildet ist.

5. Verfahren zur Erzeugung von Lücken (38) zwischen annähernd lückenlos oder gering voneinander beabstandet hintereinander auf einer Auflage- und/oder Förderebene (18) in einer Förderrichtung (16) bewegten Stückgütern (14; 14a, 14b, 14c),
- indem wenigstens ein Stückgut (14, 14b) von wenigstens einem weiteren, in Förderrichtung (16) vorauslaufenden Stückgut (14, 14a) mittels einer durch die Auflage- und/oder Förderebene (18) nach oben hindurchgreifenden und sich zumindest phasenweise gegenüber dieser mit reduzierter Geschwindigkeit (v₂) in Förderrichtung (16) bewegenden Einteileinrichtung (22) distanziert und gegenüber dem vorauslaufenden Stückgut (14, 14a) sowie gegenüber der sich fortbewegenden Auflage- und/oder Förderebene (18) verzögert wird,
- wobei die Einteileinrichtung (22) entweder in eine Lücke (38) zwischen aufeinander folgend beförderten Stückgütern (14, 14a, 14b) eingreift und das zu verzögernde Stückgut (14, 14b) an einer Anlagefläche (42) oder -kante der Einteileinrichtung (22) anliegt und unter Ausbildung der Lücke (38) zum vorauslaufenden Stückgut (14, 14a) gegenüber der Auflage- und/oder Förderebene (18) verzögert wird,
- oder wobei das dem wenigstens einen zu verzögernden Stückgut (14, 14b) vorauslaufende Stückgut (14, 14a) von der sich über die Auflage- und/oder Förderebene (18) hinausbewegenden Einteileinrichtung (22) kippend angehoben wird und die Einteileinrichtung (22) unter Wirkung der weiteren Fortbewegung der Auflage- und/oder Förderebene (18) und/oder unter Wirkung des Staudrucks des nächstfolgenden Stückgutes (14, 14b) übersteigt, bis das dem kippend angehobenen vorauslaufenden Stückgut (14, 14a) folgende, zu verzögernde Stückgut (14, 14b) an einer Anlagefläche (42) oder -kante der Einteileinrichtung (22) anliegt und unter Ausbildung der Lücke (38) zum vorauslaufenden Stückgut (14, 14a) gegenüber der Auflage- und/oder Förderebene (18) verzögert wird, wobei die Einteileinrichtung (22) wenigstens einen durch die Auflage- und/oder Förderebene (18) abschnittsweise nach oben hindurchgreifenden und sich zumindest phasenweise gegenüber der Auflage- und/oder Förderebene (18) mit reduzierter Geschwindigkeit (v₂) in Förderrichtung (16) bewegenden Einteilfinger (24) mit mindestens einem mit einer Bodenfläche des dem zurückzuhaltenden Stückgut (14, 14b) vorauslaufenden Stückgutes (14, 14a) wechselwirkenden Rotationselement (28) aufweist, das Verfahren **dadurch gekennzeichnet, dass** das um eine ungefähr horizontale und im Wesentlichen quer zur Förderrichtung (16) liegenden Achse (32) rotierende Rotationselement (28) eine Strukturierung an seinem Außenumfang aufweist und durch einen Stern (34) mit mindestens zwei Zacken (36) gebildet ist oder wird.

6. Verfahren nach Anspruch 5, bei dem die Einteileinrichtung (22) oder der mindestens eine Einteilfinger (24) zum Einteilen der Stückgüter (14; 14a, 14b, 14c) und/oder zum Herstellen einer Lücke (38) von unten gegen den Boden des einzuteilenden Stückgutes (14, 14a) fährt und dieses mit dem Rotationselement (28) oder mit dem Stern (34) anhebt.

7. Verfahren nach Anspruch 5 oder Anspruch 6, bei dem durch den Druck der nachfolgenden Stückgüter (14, 14b, 14c) das angehobene Stückgut (14, 14a) auf dem Stern (34) weitergeschoben wird, bis das nachfolgende Stückgut (14, 14b) den Stern (34) kontaktiert und/oder am Einteilfinger (24) anliegt.

8. Verfahren nach Anspruch 6 oder 7, bei dem durch den sich drehenden Stern (34) eine Zacke (36) des Sterns (34) unter eine Lücke (38) im Stückgutboden geschoben wird.

9. Verfahren nach einem der Ansprüche 6 bis 8, bei dem die nachfolgenden Stückgüter (14, 14b, 14c) im Stern (34) ein Drehmoment erzeugen und diesen in Rotation (46) versetzen.

10. Verfahren nach einem der Ansprüche 7 bis 9, bei dem ein Geschwindigkeitsunterschied zwischen einer Fördergeschwindigkeit (v₁) der Förder- und/oder Auflageebene (18) und einer Einteilgeschwindigkeit (v₂) der Einteileinrichtung (22) im Stern (34) ein Drehmoment erzeugen und dieses oder diesen in Rotation (46) versetzen.

11. Verfahren nach einem der Ansprüche 6 bis 10, bei dem das angehobene Stückgut (14, 14a) aktiv und/oder durch die Rotation (46) des Sterns (34) vom Einteilfinger (24) heruntergeschoben oder abgeworfen wird.

12. Verfahren nach einem der Ansprüche 6 bis 11, bei dem zumindest das nachfolgende Stückgut (14, 14b) mitsamt den diesem folgenden Stückgütern (14, 14c) an einer vertikalen Anlagefläche (42) des Einteilfingers (24) zurückgehalten werden, wodurch der Produktstrom oder der Stückgutstrom unter Ausbildung der Lücke (38) eingeteilt wird.

13. Verfahren nach einem der Ansprüche 5 bis 12, bei welchem das um eine ungefähr horizontale und im Wesentlichen quer zur Förderrichtung (16) liegenden Achse (32) rotierende Rotationselement (28) durch einen Stern (34) mit drei Zacken (36) gebildet ist oder wird.

## Claims

1. Transport path (12) of a handling machine and/or packaging machine, which comprises a horizontal conveying section (10) with a support surface and/or conveying surface (18) moving in a conveying direction (16), for the conveying of piece goods (14; 14a, 14b, 14c) that are approximately unspaced or slightly spaced apart from each other one after the other in conveying direction (16),
- to which support surface and/or conveying surface (18) a divider device (22) is assigned, which reaches upward through the support surface and/or conveying surface (18) and at least in phases moves in conveying direction (16) at a speed (v₂) that is reduced relative to the support surface and/or conveying surface (18), which divider device (22) can distance at least one piece good (14, 14b) from at least one further piece good (14, 14a) preceding in conveying direction (16) and can decelerate it relative to the preceding piece good (14, 14a) and relative to the proceeding support surface and/or conveying surface (18),
- which divider device (22) has at least one divider finger (24), which reaches upward in sections through the support surface and/or conveying surface (18) and at least in phases moves in conveying direction (16) at a speed (v₂) that is reduced relative to the support surface and/or conveying surface (18), which divider finger (24) has at least one rotating member (28) interacting with a base surface of the piece good (14, 14a) preceding the piece good (14, 14b) to be detained, the transport path (12) being **characterised in that** the rotating member (28) has a structure on its outer circumference and **in that** the rotating member (28) is formed by a star (34) with at least two teeth (36).

2. The transport path according to claim 1, in which the at least one rotating member (28) of the divider finger (24) can rotate about an axis (32), which is approximately horizontal and substantially transverse to the conveying direction (16).

3. The transport path according to claim 1 or claim 2, in which the rotating member (28) is formed by a star (34) with three teeth (36).

4. The transport path (12) according to one of the claims 1 to 3, in which the horizontal conveying section (10) is a horizontal conveyor device with a support surface and/or conveying surface (18) moving in transport direction, which horizontal conveyor device (20) is formed by endless circulating modular belt conveyors, link belts or mat conveyors.

5. A method for creating spaces (38) between piece goods (14; 14a, 14b, 14c) that are being moved on a support surface and/or conveying surface (18) approximately unspaced or slightly spaced apart from each other, one after the other in conveying direction (16),
- by at least one piece good (14, 14b) being distanced from at least one further piece good (14, 14a) preceding in conveying direction (16) by being decelerated relative to the preceding piece good (14, 14a) and relative to the proceeding support surface and/or conveying surface (18) by means of a divider device (22), which reaches upward through the support surface and/or conveying surface (18) and at least in phases moves at a speed (v₂) that is reduced in conveying direction (16),
- wherein the divider device (22) either engages in a space (38) between piece goods (14, 14a, 14b) being conveyed following one upon another, and the piece good (14, 14b) to be decelerated is in contact with a contact surface (42) or a contact edge of the divider device (22) and is decelerated relative to the support surface and/or conveying surface (18), thereby forming the space (38) to the preceding piece good (14, 14a),
- or wherein the piece good (14, 14a) preceding the at least one piece good (14, 14b) to be decelerated is lifted up in a tilting manner by the divider device (22), which moves beyond the support surface and/or conveying surface (18) and rises above the divider device (22) under the effect of the proceeding movement of the support surface and/or conveying surface (18) and/or under the effect of the back-up pressure of the next following piece good (14, 14b) until the piece good (14, 14b) to be decelerated, which follows the preceding piece good (14, 14a) that has been lifted in a tilting manner, is in contact with a contact surface (42) or a contact edge of the divider device (22) and is decelerated relative to the support surface and/or conveying surface (18), thereby forming the space (38) to the preceding piece good (14, 14a), wherein the divider device (22) has at least one divider finger (24), which reaches upward in sections through the support surface and/or conveying surface (18) and at least in phases moves in conveying direction (16) at a speed (v₂) that is reduced relative to the support surface and/or conveying surface (18), which divider finger (24) has at least one rotating member (28) interacting with a base surface of the piece good (14, 14a) preceding the piece good (14, 14b) to be detained, the method being **characterised in that** the rotating member (28), which rotates about an approximately horizontal axis (32) lying substantially transverse to the conveying direction (16), has a structure on its outer circumference and is formed by a star (34) with at least two teeth (36).

6. The method according to claim 5, in which, in order to divide the piece goods (14; 14a, 14b, 14c) and/or to produce a space (38), the divider device (22) or the at least one divider finger (24) moves from below against the base of the piece good (14, 14a) to be divided and lifts up the piece good (14, 14a) with the rotating member (28) or with the star (34).

7. The method according to claim 5 or claim 6, in which the lifted piece good (14, 14a) is pushed further along the star (34) by the pressure of the following piece goods (14, 14b, 14c) until the following piece good (14, 14b) contacts the star (34) and/or is in contact with the divider finger (24).

8. The method according to claim 6 or 7, in which a tooth (36) of the star (34) is pushed under a space (38) in the base of the piece good by the rotating star (34).

9. The method according to one of the claims 6 to 8, in which the following piece goods (14, 14b, 14c) generate a torque in the star (34) and set the star (34) into rotation (46).

10. The method according to one of the claims 7 to 9, in which a speed difference between a conveying speed (v₁) of the conveying surface and/or support surface (18) and a dividing speed (v₂) of the divider device (22) generates a torque in the star (34) and sets the star (34) in rotation (46).

11. The method according to one of the claims 6 to 10, in which the lifted piece good (14, 14a) is pushed off or ejected from the divider finger (24) actively and/or by the rotation (46) of the star (34).

12. The method according to one of the claims 6 to 11, in which at least the following piece good (14, 14b) and the thereupon following piece goods (14, 14c) are detained on a vertical contact surface (42) of the divider finger (24), whereby the product flow or the piece goods flow is divided, thereby forming the space (38).

13. The method according to one of the claims 5 to 12, in which the rotating member (28), which rotates about an approximately horizontal axis (32) lying substantially transverse to the conveying direction (16), is formed by a star (34) with three teeth (36).

## Revendications

1. Trajet de transport (12) d'une machine de manipulation et/ou d'emballage qui présente une section de transport horizontale (10) avec un plan d'appui et/ou de transport (18) se déplaçant dans une direction de transport (16) et destiné à transporter des produits de détail (14; 14a, 14b, 14c) les uns derrière les autres dans la direction de transport (16) de manière à présenter approximativement aucune lacune entre eux ou à être légèrement espacés les uns des autres,
- auquel au plan d'appui et/ou de transport (18) est associé un dispositif à diviser (22) qui s'étend vers le haut en traversant celui-ci et se déplace au moins par phases à une vitesse réduite (v₂) par rapport au plan d'appui et/ou de transport (18), dans la direction de transport (16) et qui peut espacer au moins un produit de détail (14, 14b) d'au moins un autre produit de détail (14, 14a) qui est devant dans la direction de transport (16) et peut retarder celui-ci par rapport au produit de détail (14, 14a) qui est devant ainsi que par rapport au plan d'appui et/ou de transport (18) se déplaçant,
- lequel dispositif à diviser (22) présente au moins un doigt à diviser (24) qui s'étend vers le haut, par sections, en traversant le plan d'appui et/ou de transport et se déplace au moins par phases à une vitesse réduite (v₂) par rapport au plan d'appui et/ou de transport (18), dans la direction de transport (16) et qui comprend au moins un élément de rotation (28) interagissant avec une surface de fond du produit de détail (14, 14a) précédant le produit de détail (14, 14b) à retenir, le trajet de transport (12) étant **caractérisé par le fait que** l'élément de rotation (28) présente une structuration sur sa circonférence extérieure et est formé par une étoile (34) ayant au moins deux branches (36).

2. Trajet de transport selon la revendication 1, dans lequel ledit au moins un élément de rotation (28) du doigt à diviser (24) peut tourner autour d'un axe (32) qui est à peu près horizontal et se situe pour l'essentiel transversalement à la direction de transport (16).

3. Trajet de transport selon la revendication 1 ou la revendication 2, dans lequel l'élément de rotation (28) est formé par une étoile (34) ayant trois branches (36).

4. Trajet de transport (12) selon l'une quelconque des revendications 1 à 3, dans lequel la section de transport horizontale (10) est un dispositif de transport horizontal comprenant un plan d'appui et/ou de transport (18) qui se déplace dans la direction de transport, lequel dispositif de transport horizontal (20) est formé par des convoyeurs à chaîne à tapis, bandes à maillons ou convoyeurs à tapis circulant sans fin.

5. Procédé destiné à créer des lacunes (38) entre des produits de détail (14 ; 14a, 14b, 14c) déplacées les uns derrière les autres sur un plan d'appui et/ou de transport (18) dans une direction de transport (16) de manière à présenter approximativement aucune lacune entre eux ou à être légèrement espacés les uns des autres,
- en espaçant au moins un produit de détail (14, 14b) d'au moins un autre produit de détail (14, 14a) qui est devant dans la direction de transport (16), au moyen d'un dispositif à diviser (22) qui s'étend vers le haut en traversant ledit plan d'appui et/ou de transport (18) et se déplace au moins par phases à une vitesse réduite (v₂) par rapport à celui-ci, dans la direction de transport (16), et en le retardant par rapport au produit de détail (14, 14a) qui est devant ainsi que par rapport au plan d'appui et/ou de transport (18) se déplaçant,
- dans lequel le dispositif à diviser (22) soit s'engage dans une lacune (38) entre des produits de détail (14, 14a, 14b) transportés les uns derrière les autres et le produit de détail (14, 14b) à retarder est en appui contre une surface (42) ou bord d'appui du dispositif à diviser (22) et est retardé par rapport au plan d'appui et/ou de transport (18) en formant la lacune (38) par rapport au produit de détail (14, 14a) qui est devant,
- soit dans lequel le produit de détail (14, 14a) qui est devant ledit au moins un produit de détail (14, 14b) à retarder est soulevé à basculement par le dispositif à diviser (22) qui se déplace au-delà du plan d'appui et/ou de transport (18) et dépasse le dispositif à diviser (22) sous l'effet de la continuation du mouvement du plan d'appui et/ou de transport (18) et/ou sous l'effet de la pression dynamique du produit de détail (14, 14b) suivant jusqu'à ce que le produit de détail (14, 14a) lequel suit le produit de détail (14, 14a) qui est devant et soulevé à basculement, et lequel est à retarder soit en appui contre une surface (42) ou bord d'appui du dispositif à diviser (22) et est retardé par rapport au plan d'appui et/ou de transport (18) en formant la lacune (38) par rapport au produit de détail (14, 14a) qui est devant, dans lequel le dispositif à diviser (22) présente au moins un doigt à diviser (24) qui s'étend vers le haut, par sections, en traversant le plan d'appui et/ou de transport (18) et se déplace au moins par phases à une vitesse réduite (v₂) par rapport au plan d'appui et/ou de transport (18), dans la direction de transport (16) et qui comprend au moins un élément de rotation (28) interagissant avec une surface de fond du produit de détail (14, 14a) précédant le produit de détail (14, 14b) à retenir, le procédé étant **caractérisé par le fait que** l'élément de rotation (28) tournant autour d'un axe (32) qui est à peu près horizontal et est situé pour l'essentiel transversalement à la direction de transport (16) présente une structuration sur sa circonférence extérieure et est formé par une étoile (34) ayant au moins deux branches (36).

6. Procédé selon la revendication 5, dans lequel, pour diviser les produits de détail (14 ; 14a, 14b, 14c) et/ou pour créer une lacune (38), le dispositif à diviser (22) ou ledit au moins un doigt à diviser (24) se déplace d'en bas contre le fond du produit de détail (14, 14a) à diviser et soulève celui-ci au moyen de l'élément de rotation (28) ou de l'étoile (34).

7. Procédé selon la revendication 5 ou la revendication 6, dans lequel le produit de détail (14, 14a) soulevé est poussé plus en avant sur l'étoile (34) par la pression exercée par les produits de détail (14, 14b, 14c) suivants jusqu'à ce que le produit de détail (14, 14b) suivant entre en contact avec l'étoile (34) et/ou soit en appui sur le doigt à diviser (24).

8. Procédé selon la revendication 6 ou 7, dans lequel, dû à l'étoile (34) tournante, une branche (36) de l'étoile (34) est poussée sous une lacune (38) dans le fond de produit de détail.

9. Procédé selon l'une quelconque des revendications 6 à 8, dans lequel les produits de détail (14, 14b, 14c) suivants génèrent un couple dans l'étoile (34) et mettent celle-ci en rotation (46).

10. Procédé selon l'une quelconque des revendications 7 à 9, dans lequel une différence de vitesse entre une vitesse de transport (v₁) du plan de transport et/ou d'appui (18) et une vitesse de division (v₂) du dispositif à diviser (22) génère un couple dans l'étoile (34) et met celle-ci en rotation (46).

11. Procédé selon l'une quelconque des revendications 6 à 10, dans lequel le produit de détail (14, 14a) soulevé est retiré en étant poussé ou éjecté du doigt à diviser (24) soit de manière active et/ou par la rotation (46) de l'étoile (34).

12. Procédé selon l'une quelconque des revendications 6 à 11, dans lequel au moins le produit de détail (14, 14b) suivant ainsi que les produits de détail (14, 14c) qui suivent celui-ci sont retenus sur une surface d'appui verticale (42) du doigt à diviser (24) ce par quoi le flux de produits ou le flux de produits de détail est divisé en formant la lacune (38).

13. Procédé selon l'une quelconque des revendications 5 à 12, dans lequel l'élément de rotation (28) qui tourne autour d'un axe (32) qui est à peu près horizontal et est situé pour l'essentiel transversalement à la direction de transport (16) est formé par une étoile (34) ayant trois branches (36).
